# EUROPEAN PATENT SPECIFICATION

(11) **EP 2 876 862 B1**
(45) Date of publication and mention of the grant of the patent: **27.05.2020**
(21) Application number: 13194392.0
(22) Date of filing: 26.11.2013
(51) Int. Cl.: H04L 29/06, G06F 16/40

(54) **Establishment of a related image sharing session**
Aufbau einer Sitzung zur gemeinsamen Verwendung verwandter Bilder
Établissement d'une session de partage d'image associée

(43) Date of publication of application: 27.05.2015
(73) Proprietor: Nokia Technologies Oy, 02610 Espoo (FI)
(72) Inventor: Leppänen, Jussi, 33580 Tampere (FI); Eronen, Antti, 33820 Tampere (FI); Lehtiniemi, Arto, 33880 Lempäälä (FI); Mattila, Ville-Veikko, 33560 Tampere (FI)
(74) Representative: Berggren Oy, Tampere

(56) References cited:
- US-A1- 2008 263 040
- US-A1- 2013 130 711

## Description

### TECHNICAL FIELD

The present application relates generally to establishment of a related image sharing session.

### BACKGROUND

Electronic apparatuses, such as mobile communication apparatuses, are becoming more and more pervasive. Apparatuses can perform numerous functions and a user can provide inputs that will cause an apparatus to take desired actions or change its behavior based on the inputs. It may be desirable for user interaction with an apparatus to be convenient for the user. It may also be desirable to design the apparatus so that the apparatus functions in ways that enable a user to interact socially with other users.

US2008263040 discloses a system and method for making a face call. The method includes receiving a first picture, where the first picture is sent from a first communication device by a first user. Further, the method includes performing a visual search of the first picture and presenting search results to the first user. The method further includes selecting a second picture of a second user from the search results, where the second picture is selected by the first user. Finally, the method includes facilitating a communication session between the first user and the second user.
US2013130711 discloses portable electronic devices and methods allowing picture sharing to be performed, taking into account both information on a list of contacts in one or several portable electronic devices and geographic information associated with captured images.

### SUMMARY

Various aspects of examples of the invention are set out in the claims.

One or more embodiments may provide an apparatus, a computer readable medium, a non-transitory computer readable medium, a computer program product, and a method for receiving information indicative of an image from a primary apparatus, determining a relationship criteria that corresponds with the image, identifying a secondary apparatus that is associated with a related image that corresponds with the relationship criteria, causing establishment of a related image sharing session between the primary apparatus and the secondary apparatus, sending an indication that the related image sharing session has been established to the primary apparatus and the secondary apparatus, and causing sending of the image to the secondary apparatus.

One or more embodiments may provide an apparatus, a computer readable medium, a computer program product, and a non-transitory computer readable medium having means for receiving information indicative of an image from a primary apparatus, means for determining a relationship criteria that corresponds with the image, means for identifying a secondary apparatus that is associated with a related image that corresponds with the relationship criteria, means for causing establishment of a related image sharing session between the primary apparatus and the secondary apparatus, means for sending an indication that the related image sharing session has been established to the primary apparatus and the secondary apparatus, and means for causing sending of the image to the secondary apparatus.

One or more embodiments may provide an apparatus, the apparatus comprising at least one processor and at least one memory, and the memory comprising machine-readable instructions, that when executed cause the apparatus to perform receipt of information indicative of an image from a primary apparatus, determination of a relationship criteria that corresponds with the image, identification of a secondary apparatus that is associated with a related image that corresponds with the relationship criteria, causation of establishment of a related image sharing session between the primary apparatus and the secondary apparatus, sending of an indication that the related image sharing session has been established to the primary apparatus and the secondary apparatus, and causation of sending of the image to the secondary apparatus.

In at least one example embodiment, determination of the relationship criteria is based, at least in part, on metadata associated with the image.

In at least one example embodiment, the metadata associated with the image comprises information indicative of at least one of a time of capture, a subject matter identifier, a location, or camera pose.

In at least one example embodiment, the subject matter identifier identifies a person associated with the image.

In at least one example embodiment, the relationship criteria identifies metadata that corresponds with metadata associated with the related image and that corresponds with metadata of the image.

One or more example embodiments further perform causation of sending information indicative of a related image sharing session request to the secondary apparatus, and receipt of information indicative of acceptance of the related image sharing session request, wherein causation of establishment of the related image sharing session between the primary and the secondary apparatus is based, at least in part, on receipt of information indicative of acceptance of the related image sharing session request.

One or more example embodiments further perform receipt of information indicative of an image change directive from the primary apparatus, and causation of sending of the image change directive to the secondary apparatus based, at least in part, on receipt of the image change directive from the primary apparatus.

One or more example embodiments further perform receipt of information indicative of an image display interval from the primary apparatus, determination that the image display interval has elapsed, and causation of sending of an image change directive to the secondary apparatus based, at least in part, on determination that the image display interval has elapsed.

In at least one example embodiment, the image display interval indicates a time associated with display of an image.

One or more example embodiments further perform receipt of information indicative of an image interval change request from the secondary apparatus, and causation of sending of information indicative of the image interval change request to the primary apparatus based, at least in part, on the image interval change request.

In at least one example embodiment, the image interval change request indicates a request associated with changing of an image display interval.

In at least one example embodiment, the image interval change request indicates a request associated with changing of an interval associated with an image change directive.

One or more example embodiments further perform receipt of an image sharing directive, wherein sending of the image is based, at least in part, on the image sharing directive associated with the image.

One or more embodiments may provide an apparatus, a computer readable medium, a non-transitory computer readable medium, a computer program product, and a method for causing display of an image, causing sending of information indicative of the image, receiving an indication that a related image sharing session has been established with a secondary apparatus, the related image sharing session being constrained by a relationship criteria that corresponds with the image, and causing sending of the image to the secondary apparatus based, at least in part, on correspondence between the image and the relationship criteria.

One or more embodiments may provide an apparatus, a computer readable medium, a computer program product, and a non-transitory computer readable medium having means for causing display of an image, means for causing sending of information indicative of the image, means for receiving an indication that a related image sharing session has been established with a secondary apparatus, the related image sharing session being constrained by a relationship criteria that corresponds with the image, and means for causing sending of the image to the secondary apparatus based, at least in part, on correspondence between the image and the relationship criteria.

In at least one example embodiment, causation of display of the image comprises display of the image on a display of the apparatus.

In at least one example embodiment, causation of display of the image comprises sending information indicative of the image to a separate apparatus for display.

One or more example embodiments further perform identification of information indicative of an image, determination of a relationship criteria that corresponds with the image, identification of a secondary apparatus that is associated with a related image that corresponds with the relationship criteria, causation of establishment of a related image sharing session with the secondary apparatus, causation of sending of an indication that the related image sharing session has been established to the secondary apparatus, and causation of sending of the image to the secondary apparatus.

One or more example embodiments further perform causation of display of a representation of a related image sharing session establishment notification based, at least in part, on receipt of the indication that the related image sharing session has been established with the secondary apparatus.

One or more example embodiments further perform receipt of information indicative of an image sharing input associated with the image, wherein causation of sending the image to the secondary apparatus is based, at least in part, on the image sharing input.

One or more example embodiments further perform causation of sending of information indicative of an image sharing directive associated with the image based, at least in part, on the image sharing input.

In at least one example embodiment, the image sharing input is a swipe input.

One or more example embodiments further perform receipt of information indicative of an image change input, and causation of display of another image based, at least in part, on the image change input.

One or more example embodiments further perform determination of the other image based, at least in part, on an image order list, the image order list identifying an order in which images are arranged for display.

In at least one example embodiment, the image order list indicates a sequence in which images are displayed.

One or more example embodiments further perform determination of the image order list based, at least in part, on a sort criteria.

One or more example embodiments further perform receipt of information indicative of an image order list change input, and determination of a different image order list based, at least in part, on the image order list change input.

In at least one example embodiment, the image and the other image are adjacent within the image order list.

One or more example embodiments further perform receipt of information indicative of an image display interval setting input, the image display interval setting input identifying an image display interval, determination that the image display interval has elapsed, and causation of display of another image based, at least in part, on determination that the image display interval has elapsed.

One or more example embodiments further perform causation of sending information indicative of the image display interval.

In at least one example embodiment, the other image is another related image, and further comprising causation of sending of information indicative of an image change directive to a separate apparatus.

One or more example embodiments further perform receipt of information indicative of failure to identify a different related image from the separate apparatus, and causation of display of a representation of a related image warning notification based, at least in part, on receipt of information indicative of the separate apparatus failing to identify the different related image.

In at least one example embodiment, the related image warning notification indicates that the separate apparatus fails to identify a different image that corresponds with the relationship criteria.

One or more example embodiments further perform receipt of information indicative of another image change input, and causation of termination of the related image sharing session based, at least in part, on the other image change input.

One or more example embodiments further perform receipt of information indicative of an image interval change request, and causation of display of an image interval change request notification based, at least in part, on the image interval change request.

In at least one example embodiment, the image interval change request indicates a decrease in an interval between image change inputs, and the image interval change request notification comprises information indicative of the requested decrease in the interval.

In at least one example embodiment, the image interval change request indicates an increase in an interval between image change inputs, and the image interval change request notification comprises information indicative of the requested increase in the interval.

In at least one example embodiment, the image interval change request indicates a decrease in an image display interval, and the image interval change request notification comprises information indicative of the requested decrease in the image display interval.

In at least one example embodiment, the image interval change request indicates an increase in an image display interval, and the image interval change request notification comprises information indicative of the requested increase in the image display interval.

One or more example embodiments further perform receipt of information indicative of an image grid view input, and causation of display of a representation of the image and a representation of at least one related image, the related image corresponding with the relationship criteria, based, at least in part, on the image grid view input.

In at least one example embodiment, the image grid view input is a pinch input.

One or more example embodiments further perform receipt of information indicative of an image viewing indication associated with the related image, and causation of display of a representation of the image viewing indication in relation to the related image.

One or more embodiments may provide an apparatus, a computer readable medium, a non-transitory computer readable medium, a computer program product, and a method for receiving an indication that a related image sharing session has been established with a primary apparatus, the related image sharing session being constrained by a relationship criteria, causing display of a related image that corresponds with the relationship criteria, receiving another related image that corresponds with the relationship criteria, and causing display of the other related image.

One or more embodiments may provide an apparatus, a computer readable medium, a computer program product, and a non-transitory computer readable medium having means for receiving an indication that a related image sharing session has been established with a primary apparatus, the related image sharing session being constrained by a relationship criteria, means for causing display of a related image that corresponds with the relationship criteria, means for receiving another related image that corresponds with the relationship criteria, and means for causing display of the other related image.

One or more example embodiments further perform receipt of information indicative of a related image sharing session request, and causation of sending of information indicative of acceptance of the related image sharing session request, wherein receipt of the indication that the related image sharing session has been established with the primary apparatus is based, at least in part, on sending of information indicative of acceptance of the related image sharing session request.

One or more example embodiments further perform receipt of information indicative of a related image sharing session acceptance input, and wherein receipt of the indication that the related image sharing session has been established with the primary apparatus is based, at least in part, on the related image sharing session acceptance input.

One or more example embodiments further perform causation of display of a representation of a related image sharing session request notification, wherein the related image sharing session acceptance input is associated with the representation of the related image sharing session request notification.

In at least one example embodiment, the related image sharing session request notification is a notification indicating receipt of the related image sharing session request.

In at least one example embodiment, causation of display of the related image that corresponds with the relationship criteria comprises display of the related image on a display of the apparatus.

In at least one example embodiment, causation of display of the related image that corresponds with the relationship criteria comprises sending information indicative of the related image to a separate apparatus for display.

One or more example embodiments further perform receipt of information indicative of an image change directive, and causation of display of a different related image that corresponds with the relationship criteria based, at least in part, on the image change directive.

One or more example embodiments further perform receipt of information indicative of an image change directive, failure to identify a different related image, and causation of sending of information indicative of failure to identify a different related image.

One or more example embodiments further perform receipt of information indicative of an image interval change input, and causation of sending an image interval change request based, at least in part, on the image interval change input.

One or more example embodiments further perform determination of an image order list based, at least in part, on a sort criteria, and wherein causation of display of the other related image is based, at least in part, on the image order list.

In at least one example embodiment, the sort criteria indicates a characteristic of metadata associated with the related image and the other related image.

In at least one example embodiment, an order of display of the related image and the other related image is based, at least in part, on the image order list.

In at least one example embodiment, determination of the image order list is based, at least in part, the sort criteria, metadata associated with the related image, and metadata associated with the other related image.

One or more example embodiments further perform causation of sending of a different related image that corresponds with the relationship criteria to the primary apparatus based, at least in part, on receipt of the other related image that corresponds with the relationship criteria.

One or more example embodiments further perform receipt of information indicative of an image sharing input associated with a different related image that corresponds with the relationship criteria, and causation of sending of the different related image to the primary apparatus based, at least in part, on the image sharing input.

One or more example embodiments further perform causation of sending information indicative of an image viewing indication associated with the other related image based, at least in part, on display of the other related image.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURE 2 is a block diagram showing apparatus communication according to at least one example embodiment;
FIGURE 3 is an interaction diagram showing activities associated with establishment of a related image sharing session according to at least one example embodiment;
FIGURES 4A-4D are illustrations showing establishment of a related image sharing session according to at least one example embodiment;
FIGURES 5A-5B are illustrations showing display of an image according to at least one example embodiment;
FIGURES 6A-6B are illustrations showing sending of an image according to at least one example embodiment;
FIGURES 7A-7B are illustrations showing display of an image according to at least one example embodiment;
FIGURES 8A-8B are illustrations showing display of an image according to at least one example embodiment;
FIGURE 9 is an interaction diagram showing activities associated with sending of an image change directive according to at least one example embodiment;
FIGURE 10 is an interaction diagram showing activities associated with sending of an image interval change request according to at least one example embodiment;
FIGURE 11 is an interaction diagram showing activities associated with sending of an image according to at least one example embodiment; and
FIGURE 12 is an interaction diagram showing activities associated with sending of an image according to at least one example embodiment.

### DETAILED DESCRIPTION OF THE DRAWINGS

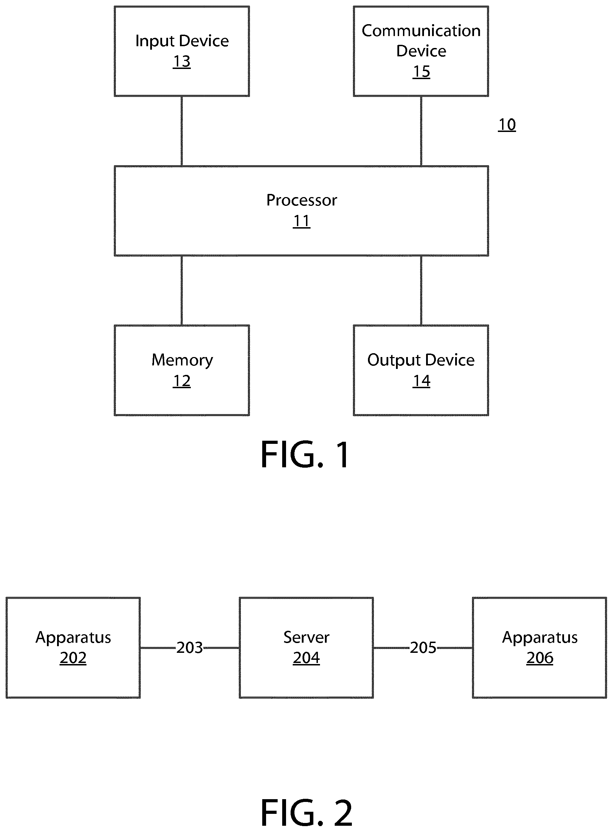

An embodiment of the invention and its potential advantages are understood by referring to FIGURES 1 through 12 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a wearable apparatus, a wrist-worn apparatus, a watch apparatus, a global positioning system (GPS) apparatus, a refrigerator, and automobile, a kiosk, an electronic table, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may relate to, at least part of, a non-carryable apparatus, such as a large screen television, a refrigerator, a kiosk, an automobile, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus that comprises a display, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may relate to information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, ^{∗}), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURE 2 is a block diagram showing apparatus communication according to at least one example embodiment. The example of FIGURE 2 is merely an example and does not limit the scope of the claims. For example, apparatus count may vary, server count may vary, communication channels may vary, and/or the like.

In many circumstances, a user may desire to experience media by way of an electronic apparatus. For example, the user may desire to view an image, browse through a set of images, experience an image slideshow, and/or the like. In many circumstances, the user may desire to engage in social interactions by way of the user's electronic apparatus. For example, the user may desire to share an image with another user, to view an image captured by another user, to engage in shared experience of a set of images, and/or the like. It may be desirable to allow for viewing of images from multiple electronic apparatuses in a way that allows for an enhanced user experience associated with collaboratively and socially experiencing and/or sharing of images.

In order to facilitate such a viewing experience, in many circumstances, it may be desirable to allow for communication between two or more apparatuses. For example, it may be desirable to allow for communication between a primary apparatus and a secondary apparatus. In such an example, each of the primary apparatus and the secondary apparatus may be a phone, a tablet, a computer, a laptop, an electronic apparatus, and/or the like. In at least one example embodiment, a primary apparatus and a secondary apparatus communicate via a direct communication channel. In such an example embodiment, the direct communication channel may route communication between the primary apparatus and the secondary apparatus by way of one or more routers, switches, hubs, distribution servers, and/or the like. In at least one example embodiment, a primary apparatus and a secondary apparatus communicate via an indirect communication channel by way of a server. In such an example embodiment, the server may be a computer, a service platform, a repository, an application, and/or the like. In at least one example embodiment, the server is comprised by the primary apparatus.

In the example of FIGURE 2, apparatus 202 is a primary apparatus and apparatus 206 is a secondary apparatus. Each of apparatuses 202 and 206 may be a phone, a tablet, a computer, a laptop, an electronic apparatus, and/or the like. In the example of FIGURE 2, apparatus 202 is in communication with server 204 by way of communication channel 203 and apparatus 206 is in communication with server 204 by way of communication channel 205. In the example of FIGURE 2, each of communication channels 203 and 205 may be a local area network communication channel, a wireless local area network communication channel, a wide area network communication channel, a cellular communication channel, a service level communication channel, a software communication channel, and/or the like. Server 204 may be a computer, a service platform, a repository, an application, and/or the like. In the example of FIGURE 2, apparatus 202 is in indirect communication with apparatus 206 via communication channels 203 and 205, by way of server 204. In at least one example embodiment, apparatus 202 is in direct communication with apparatus 206. In at least one example embodiment, apparatus 202 performs activities associated with server 204. In at least one example embodiment, server 204 is comprised by apparatus 202 such that communication channel 205 is a direction communication channel between apparatus 202 and apparatus 206. For example, apparatus 202 may be a phone and server 204 may be a service running on apparatus 202. Even though the example of FIGURE 2 illustrates apparatus 202 and apparatus 206 in communication by way of server 204, in at least one example embodiment, an apparatus may communicate with another apparatus absent communication with a server.

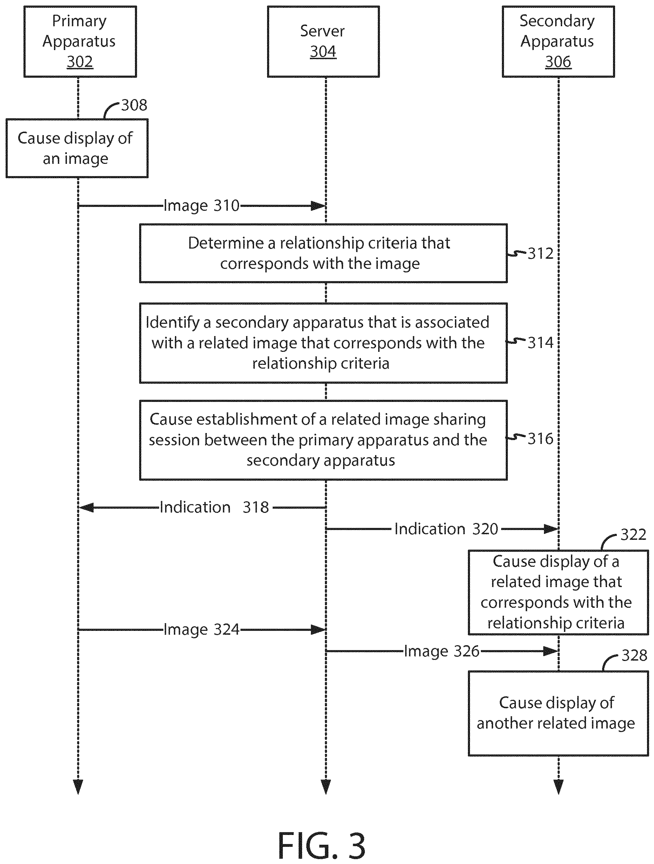

FIGURE 3 is an interaction diagram illustrating activities associated with establishment of a related image sharing session according to at least one example embodiment. In at least one example embodiment, there is a set of operations that corresponds with, at least some of, the activities of FIGURE 3. For example, there may be a set of operations associated with activities of one or more apparatuses of FIGURE 3. An apparatus, for example electronic apparatus 10 of FIGURE 1, or a portion thereof, apparatus 202 of FIGURE 2, or a portion thereof, server 204 of FIGURE 2, or a portion thereof, or apparatus 206 of FIGURE 2, or a portion thereof, may utilize the set of operations. In at least one example embodiment, primary apparatus 302 performs, at least some of, the activities associated with server 304 of FIGURE 3. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform at least part of the set of operations of FIGURE 3.

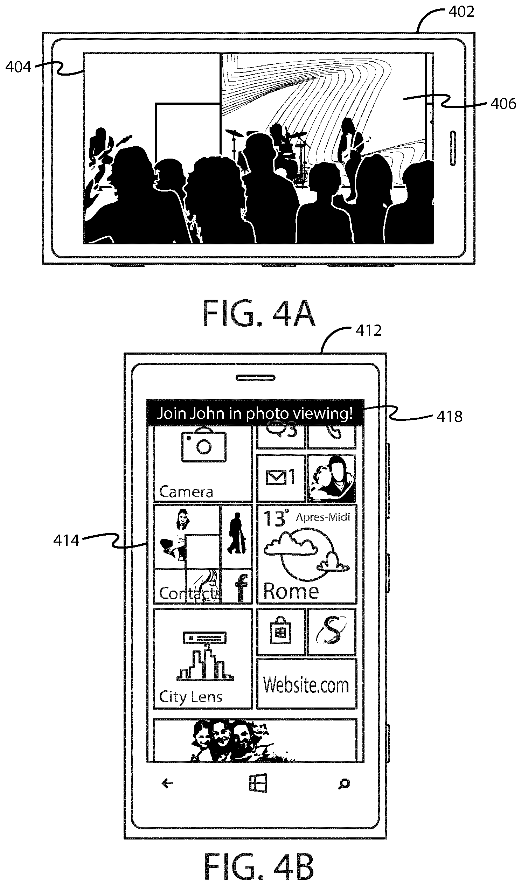

In many circumstances, a user may desire to experience media by way of an electronic apparatus. As electronic apparatuses continually increase in pervasiveness, a user of an electronic apparatus may become increasingly dependent upon their electronic apparatus for basic social function, image browsing, and/or the like. For example, the user may desire to view an image, browse through a set of images, experience an image slideshow, and/or the like. In at least one example embodiment, an apparatus causes display of an image. Causation of display of the image may, for example, comprise display of the image of a display of the apparatus, sending of information indicative of the image to a separate apparatus for display, and/or the like. For example, in the example of FIGURE 4A, apparatus 402 comprises display 404 and is displaying image 406 on display 404. In such an example, apparatus 402 may cause display of an image by displaying, at least part of, the image on display 404.

In many circumstances, a user viewing an image may desire to view additional images that pertain to similar subject matter, that were captured at a specific location, that are associated with a specific time, that depict a certain location, and/or the like. For example, a user viewing an image that the user captured while attending a heavy metal concert. In such an example, the image may have been captured while the user was listening to a particular band that was performing at a particular time and a particular location. In such an example, the user may desire to view additional images that were captured at the same heavy metal concert, depicting the same band, at the same time, at the same location, and/or the like.

In order to facilitate viewing of different images similar to a specific image, it may be desirable to determine a specific criteria associated with the specific image. In at least one example embodiment, identification of similar images is performed by a server. A server may, for example, relate to a computer, a repository, a service platform, a software service, and/or the like. In at least one example embodiment, an apparatus causes sending of information indicative of an image to a server. For example, information indicative of the image may be metadata associated with the image. In such an example, the metadata associated with the image may comprise information indicative of a time of capture, a subject matter identifier, a location, and/or the like. A time of capture may, for example, identify a discrete time of capture of the image, a time of day associated with capture of the image, a season during which the image was captured of the image, and/or the like. A subject matter identifier may, for example, identify a person associated with the image, a person depicted in the image, a point of interest depicted in the image, a photographer that captured the image, and/or the like. A location may, for example, identify a location at which the image was captured, a location associated with the subject matter depicted in the image, and/or the like.

In at least one example embodiment, a server and/or apparatus receives information indicative of an image from a primary apparatus. For example, the server may receive metadata associated with the image, may receive the image, and/or the like. The server may receive the information indicative of the image from an apparatus that has caused display of the image. For example, the apparatus may cause display of the image and send information indicative of the image to the server. In at least one example embodiment, a server and/or apparatus determines a relationship criteria that corresponds with an image. In at least one example embodiment, determination of the relationship criteria may be based, at least in part, on metadata associated with the image. In such an example embodiment, the relationship criteria may, for example, identify metadata that corresponds with metadata associated with the image. In this matter, for example, the server may utilize the relationship criteria, at least in part, to identify additional images that may be associated with similar metadata. For example, the server may utilize a location-related relationship criteria to constrain identification of additional images to those images taken in geographical proximity to a specific location associated with an image, may utilize a time-related relationship criteria constrain identification of additional images to those images taken in temporal proximity to a specific time associated with the image, may utilize a subject matter-related relationship criteria to constrain identification of additional images to those images depicting subject matter similar to subject matter associated with the image, and/or the like. In at least one example embodiment, an image that corresponds with a relationship criteria is a related image. In at least one example embodiment, a set of images that correspond with a relationship criteria are related images.

In many circumstances, the user may desire to engage in social interactions by way of the user's electronic apparatus. For example, the user may desire to share an image with another user, to view an image captured by another user, to engage in shared experience of a set of images, and/or the like. It may be desirable to allow for viewing of images from multiple electronic apparatuses in a way that allows for an enhanced user experience associated with collaboratively and socially experiencing and/or sharing of images. For example, a user may be viewing an image on a primary apparatus. In many circumstances, related images may be associated with a different user's apparatus, such as a secondary apparatus. In order to facilitate identification of related images, in at least one example embodiment, a server and/or apparatus may identify a secondary apparatus that is associated with a related image. In such an example embodiment, the related image may correspond with the relationship criteria. For example, metadata associated with the related image may correspond with metadata associated with the image being displayed on the primary apparatus. In such an example, the user may desire to view his or her images along with another user's related images in a fun and exciting manner. For example, the user may desire to collectively simultaneously experience, with other users, images that the user captured and related images that one or more of the other users captured.

It should be understood that implementation of the teachings described herein may vary. For example, one or more operations described as being performed by a particular entity may be performed by a different entity. In at least one example embodiment, a primary apparatus performs activities that are described herein as being performed by a server. For example, the primary apparatus may identify a secondary apparatus that is associated with a related image that corresponds with the relationship criteria, may identify one or more related images, and/or the like.

In order to facilitate a fun and social image viewing experience, a user viewing images on a primary apparatus may desire to share such viewing experiences with another user with a secondary apparatus that is associated with one or more related images. In at least one example embodiment, a server and/or apparatus may cause establishment of a related image sharing session between a primary apparatus and a secondary apparatus. In at least one example embodiment, a related image sharing session is a sharing session between a primary apparatus and a secondary apparatus that enables communication between the primary apparatus and the secondary apparatus, facilitates sending and/or receiving of related images to and/or from the primary apparatus and the secondary apparatus, and/or the like. In at least one example embodiment, a related image sharing session is constrained by an associated relationship criteria. For example, the related image sharing session may limit sharing of related image to those images corresponding with the associated relationship criteria, may limit communication from a primary apparatus to secondary apparatuses that are associated with related images corresponding with the relationship criteria, and/or the like.

In some circumstances, a user of an electronic apparatus may desire to allow establishment of a related image sharing session with another electronic apparatus, may desire to deny establishment of the related image sharing session with the other electronic apparatus, and/or the like. In at least one example embodiment, a server and/or apparatus may cause sending of information indicative of a related image sharing session request to a secondary apparatus. A related image sharing session request may, for example, comprise information indicating an associated primary apparatus, information identifying a relationship criteria associated with the related image sharing session, and/or the like. In at least one example embodiment, a related image sharing session request is a request from a primary apparatus to allow establishment of a related image sharing session with a secondary apparatus. In at least one example embodiment, a related image sharing session request comprises information indicative of a related image sharing session request notification. The related image sharing session request notification may, for example, be a notification indicating receipt of an associated related image sharing session request, a notification indicating a request to establish a related image sharing session with another apparatus, and/or the like.

In order to facilitate identification of and/or acceptance of a related image sharing session request, in at least on example embodiment, an apparatus may cause display of a representation of a related image sharing session request notification. For example, the representation of the related image sharing session request notification may be a visual representation indicating to a user that another user desires to establish a related image sharing session between the user's apparatus and the other user's apparatus. In the example of FIGURE 4B, for example, apparatus 412 comprises display 414 and is displaying notification 418 on display 414. In the example of FIGURE 4B, notification 418 is a representation of a related image sharing session request notification. Notification 418 may have been caused to be displayed based, at least in part, on receipt of a related image sharing session request from another apparatus.

In at least one example embodiment, an apparatus may receive information indicative of a related image sharing session acceptance input. For example, the related image sharing session accepted input may indicate desire of a user to allow establishment of a related image sharing session between the user's apparatus and another apparatus. In at least one example embodiment, a related image sharing session acceptance input may be associated with a representation of a related image sharing session request notification. In at least one example embodiment, an apparatus may cause sending of information indicative of acceptance of a related image sharing session request to a separate apparatus. For example, the apparatus may be a secondary apparatus and may cause sending of information indicative of acceptance of a related image sharing session request to a server, to a primary apparatus, to a different apparatus, and/or the like. In at least one example embodiment, an apparatus receives information indicative of acceptance of a related image sharing session request. In such an example embodiment, causation of establishment of a related image sharing session between a primary apparatus and a secondary apparatus may be based, at least in part, on the receipt of information indicative of acceptance of the related image sharing session request. For example, establishment of a related image sharing session between a primary apparatus and a secondary apparatus may be caused by receipt of information indicative of acceptance of the related image sharing session request. In at least one example embodiment, a server and/or apparatus receives information indicative of acceptance of a related image sharing session request, and causes establishment of a related image sharing session between a primary apparatus and a secondary apparatus. In at least one example embodiment, a primary apparatus receives information indicative of acceptance of a related image sharing session request, and causes establishment of a related image sharing session with a secondary apparatus.

In some circumstances, it may be desirable to allow for intuitive acceptance of a related image sharing session request. In at least one example embodiment, a related image sharing session acceptance input is associated with a position that corresponds with display of a representation of a related image sharing session request notification. For example, notification 418 of FIGURE 4B is a representation of a related image sharing session request notification. In such an example, an input at a position that corresponds with a display region of notification 418 of FIGURE 4B may indicate a related image sharing session acceptance input. In such an example, the related image sharing session acceptance input may cause sending of information indicative of acceptance of the related image sharing session request to a server, to a primary apparatus, to a different apparatus, and/or the like.

In order to establish a related image sharing session between a primary apparatus and a secondary apparatus, it may be desirable to send an indication of such an establishment to the primary apparatus and the secondary apparatus. In at least one example embodiment, a server and/or apparatus may send an indication that a related image sharing session has been established between a primary apparatus and a secondary apparatus to the primary apparatus and the secondary apparatus. Receipt of the indication that the related image sharing session has been established with the primary apparatus may be based, at least in part, on the related image sharing session acceptance input, sending of information indicative of acceptance of the related image sharing session request, and/or the like. In at least one example embodiment, a primary apparatus may receive an indication that a related image sharing session has been established with a secondary apparatus. In such an example embodiment, the related image sharing session may be constrained by a relationship criteria that corresponds with an image associated with the related image sharing session. In at least one example embodiment, a secondary apparatus may receive an indication that a related image sharing session has been established with a primary apparatus. In such an example embodiment, the related image sharing session may be constrained by a relationship criteria that corresponds with an image associated with the related image sharing session. In at least one example embodiment, a primary apparatus performs activities associated with the server. For example, the primary apparatus may cause sending of an indication that a related image sharing session has been established to the secondary apparatus.

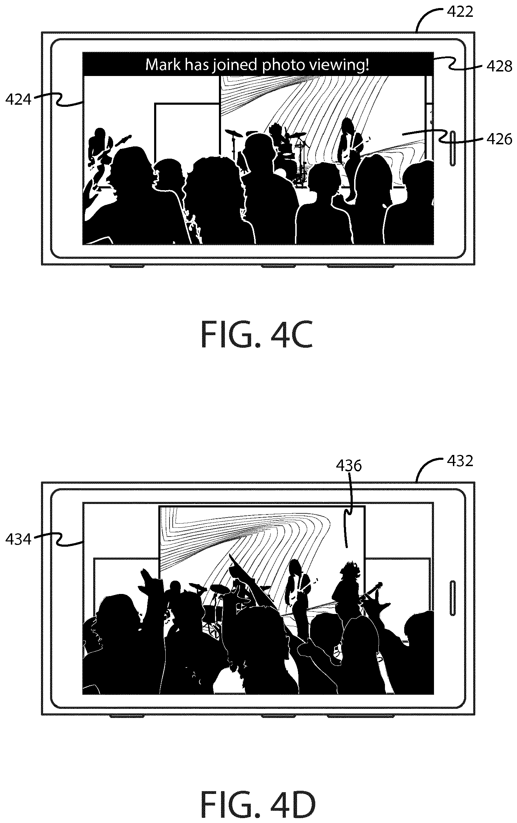

In some circumstances, a user may desire confirmation regarding establishment of a related image sharing session. For example, a user may view an image on an apparatus. In such an example, the apparatus may automatically initiate causation of identification of another apparatus and establishment of a related image sharing session with the other apparatus. In at least one example embodiment, an apparatus may cause display of a representation of a related image sharing session establishment notification based, at least in part, on receipt of an indication that the related image sharing session has been established with another apparatus. The related image sharing session establishment notification may, for example, comprise a visual representation indicating that a related image sharing session has been successfully established with another apparatus. In the example of FIGURE 4C, apparatus 422 comprises display 424 and is displaying image 426. In the example of FIGURE 4C, apparatus 422 is displaying notification 428. Notification 428 may, for example, be a representation of a related image sharing session establishment notification. Display of notification 428 by apparatus 422 may be based, at least in part, on establishment of a related image sharing session with another apparatus. In the example of FIGURE 4C, image 426 relates to an image associated with the related image sharing session. For example, a relationship criteria constraining the related image sharing session between apparatus 422 and the other apparatus may be based, at least in part, on metadata associated with image 426.

In some situations, a user of an apparatus and another user of another apparatus may desire to simultaneously view similar images. For instance, two friends may have attended a heavy metal concert together and, while enjoying the tunes, may have captured numerous images of the stage and the crowd. In such an example, the two friends may desire to experience their captured images in such a way that the two friends' experiences are synchronized in an exciting and social manner. In at least one example embodiment, a secondary apparatus may cause display of a related image that corresponds with a relationship criteria. For example, based, at least in part, on establishment of a related image sharing session between the secondary apparatus and a primary apparatus displaying an image, the secondary apparatus may cause display of a related image similar to the image being displayed on the primary apparatus. For example, the friend using the primary apparatus may be viewing an image of the heavy metal concert captured via the primary apparatus. In such an example, upon establishment of a related image sharing session, the secondary apparatus may automatically cause display of a related image, for example, another image captured via the secondary apparatus during the heavy metal concert. For example, in the example of FIGURE 4D, apparatus 432 comprises display 434 and is displaying image 436 on display 434. In the example of FIGURE 4D, image 436 is a related image that is related to image 428 of FIGURE 4C. For example, a related image sharing session between apparatus 422 of FIGURE 4C and apparatus 432 of FIGURE 4D may have been established. In such an example, a relationship criteria may have been determined based, at least in part, on metadata associated with image 428 of FIGURE 4C. In such an example, apparatus 432 of FIGURE 4D may have been identified based, at least in part, on image 436 of FIGURE 4D corresponding with the relationship criteria.

In the example of FIGURE 3, communication between primary apparatus 302, server 304, and secondary apparatus 306 may be similar as described regarding FIGURE 2. Each of primary apparatus 302 and secondary apparatus 306 may be a phone, a tablet, a computer, a laptop, an electronic apparatus, and/or the like. Server 304 may be a computer, a service platform, a repository, an application, and/or the like.

At block 308, primary apparatus 302 causes display of an image. The causation, the display, and the image may be similar as described regarding FIGURE 2, FIGURES 4A-4D, FIGURES 5A-5B, FIGURES 6A-6B, and FIGURES 7A-7B.

At interaction 310, primary apparatus 302 causes sending of information indicative of the image to server 304 based, at least in part, on causation of display of the image. In this manner, server 304 may receive information indicative of the image from primary apparatus 302. The sending, the causation of sending, and the information indicative of the image may be similar as described regarding FIGURE 2, FIGURES 4A-4D, FIGURES 5A-5B, FIGURES 6A-6B, and FIGURES 7A-7B.

At block 312, server 304 determines a relationship criteria that corresponds with the image based, at least in part, on the information indicative of the image. In at least one example embodiment, primary apparatus 302 performs the activities associated with block 312. In such an example embodiment, primary apparatus 302 determines the relationship criteria that corresponds with the image based, at least in part, on the information indicative of the image. The determination, the relationship criteria, and the correspondence with the image may be similar as described regarding FIGURE 2 and FIGURES 4A-4D.

At block 314, server 304 identifies a secondary apparatus that is associated with a related image that corresponds with the relationship criteria. In at least one example embodiment, primary apparatus 302 performs the activities associated with block 314. In such an example embodiment, primary apparatus 302 identifies the secondary apparatus that is associated with the related image that corresponds with the relationship criteria. The identification, the secondary apparatus, the related image, the association of the secondary apparatus and the related image, and the correspondence between the related image and the relationship criteria may be similar as described regarding FIGURE 2 and FIGURES 4A-4D.

At block 316, server 304 causes establishment of a related image sharing session between the primary apparatus and the secondary apparatus. In at least one example embodiment, primary apparatus 302 performs the activities associated with block 316. In such an example embodiment, primary apparatus 302 causes establishment of the related image sharing session with the secondary apparatus. The causation, the establishment, and the related image sharing session may be similar as described regarding FIGURE 2 and FIGURES 4A-4D.

At interaction 318, server 304 sends an indication that the related image sharing session has been established to the primary apparatus. In this manner, primary apparatus 302 may receive the indication that the related image sharing session has been established with secondary apparatus 306 from server 304. The related image sharing session may, for example, be constrained by the relationship criteria that corresponds with the image. In at least one example embodiment, primary apparatus 302 performs the activities associated with interaction 318. In this manner, primary apparatus 302 may receive indication that the related image sharing session has been established with secondary apparatus 306 from primary apparatus 302. The sending and the indication that the related image sharing session has been established may be similar as described regarding FIGURE 2 and FIGURES 4A-4D.

At interaction 320, server 304 sends an indication that the related image sharing session has been established to the secondary apparatus. In this manner, secondary apparatus 306 may receive the indication that the related image sharing session has been established with primary apparatus 302 from server 304. The related image sharing session may, for example, be constrained by the relationship criteria that corresponds with the image. In at least one example embodiment, primary apparatus 302 performs the activities associated with interaction 320. In such an example embodiment, primary apparatus 302 sends an indication that the related image sharing session has been established to the secondary apparatus. In this manner, secondary apparatus 306 may receive the indication that the related image sharing session has been established with primary apparatus 302 from primary apparatus 302. The sending and the indication that the related image sharing session has been established may be similar as described regarding FIGURE 2 and FIGURES 4A-4D.

At block 322, secondary apparatus 306 causes display of a related image that corresponds with the relationship criteria. The causation, the display, the related image, and the correspondence between the related image and the relationship criteria may be similar as described regarding FIGURE 2, FIGURES 4A-4D, FIGURES 5A-5B, FIGURES 6A-6B, FIGURES 7A-7B, and FIGURES 8A-8B.

At interaction 324, primary apparatus 302 causes sending of the image to server 304 based, at least in part, on correspondence between the image and the relationship criteria. In this manner, server 304 may receive the image from primary apparatus 302. In at least one example embodiment, primary apparatus 302 performs the activities associated with interaction 324. In such an example embodiment, primary apparatus 302 may cause sending of the image directly to secondary apparatus 306. In this manner, secondary apparatus 306 may receive the image from primary apparatus 302. The sending, the causation of sending, the image, and the correspondence between the image and the relationship criteria may be similar as described regarding FIGURE 2, FIGURES 4A-4D, FIGURES 5A-5B, FIGURES 6A-6B, FIGURES 7A-7B, and FIGURES 8A-8B.

At interaction 326, server 304 causes sending of the image to secondary apparatus 306. In this manner, secondary apparatus 306 may receive the image from server 304. In at least one example embodiment, primary apparatus 302 performs the activities associated with interaction 326. In such an example embodiment, primary apparatus 302 may cause sending of the image directly to secondary apparatus 306. In this manner, secondary apparatus 306 may receive the image from primary apparatus 302. The sending, the causation of sending, and the image may be similar as described regarding FIGURE 2, FIGURES 4A-4D, FIGURES 5A-5B, FIGURES 6A-6B, FIGURES 7A-7B, and FIGURES 8A-8B.

At block 328, secondary apparatus 306 causes display of another related image. The display, the causation of display, and the other related image may be similar as described regarding FIGURE 2, FIGURES 4A-4D, FIGURES 5A-5B, FIGURES 6A-6B, FIGURES 7A-7B, and FIGURES 8A-8B.

It should be understood that in at least one example embodiment, primary apparatus 302 may perform one or more of the operations that are described as being performed by server 304 in FIGURE 3. For example, primary apparatus 302 may perform one or more of blocks 312, 314, or 316. Similarly, one or more of the interactions between primary apparatus 302 and server 304 may be omitted based, at least in part, on performance of the operations of server 304 by primary apparatus 302. For example, performance of block 312 by primary apparatus 302 may allow for avoidance of interaction 310, performance of block 316 by primary apparatus 302 may allow for avoidance of interaction 318, and/or the like.

FIGURES 4A-4D are illustrations showing establishment of a related image sharing session according to at least one example embodiment. The examples of FIGURES 4A-4D are merely examples and do not limit the scope of the claims. For example, apparatus design may vary, representations may vary, notifications may vary, display of images may vary, and/or the like.

FIGURE 4A is an illustration showing display of an image according to at least one example embodiment. In the example of FIGURE 4A, apparatus 402 comprises display 404. Apparatus 402 may be a primary apparatus, a secondary apparatus, and/or the like. In the example of FIGURE 4A, image 406 is displayed on display 404 of apparatus 402. In at least one example embodiment, apparatus 402 may display more than one related image in addition to image 406, may display a portion of a related, and/or the like. Although apparatus 402 is depicted in landscape mode, apparatus orientation and/or display orientation may vary.

FIGURE 4B is an illustration showing display of a representation of a related image sharing session request notification according to at least one example embodiment. In the example of FIGURE 4B, apparatus 412 comprises display 414. Apparatus 412 may be a primary apparatus, a secondary apparatus, and/or the like. In the example of FIGURE 4B, notification 418 is displayed on display 414 of apparatus 412. In the example of FIGURE 4B, notification 418 is a representation of a related image sharing session request notification. Notification 418 may have been caused to be displayed based, at least in part, on receipt of a related image sharing session request from another apparatus. For example, notification 418 may have been caused to be displayed based, at least in part, on receipt of a related image sharing session request from apparatus 402 of FIGURE 4A, another apparatus, and/or the like. Although the example of FIGURE 4B depicts notification 418 as a pop-down notification, display of notification 418 may vary. For example, the representation of the notification may vary, display location of the notification may vary, and/or the like.

FIGURE 4C is an illustration showing display of a representation of a related image sharing session establishment notification according to at least one example embodiment. In the example of FIGURE 4C, apparatus 422 comprises display 424. Apparatus 422 may be a primary apparatus, a secondary apparatus, and/or the like. In the example of FIGURE 4C, image 426 is displayed on display 424 of apparatus 422. In the example of FIGURE 4C, apparatus 422 is displaying notification 428. Notification 428 may, for example, be a representation of a related image sharing session establishment notification. Display of notification 428 by apparatus 422 may be based, at least in part, on establishment of a related image sharing session with another apparatus. In the example of FIGURE 4C, image 426 relates to an image associated with the related image sharing session. Although the example of FIGURE 4C depicts notification 428 as a pop-down notification, display of notification 428 may vary. For example, the representation of the notification may vary, display location of the notification may vary, and/or the like.

FIGURE 4D is an illustration showing display of a related image according to at least one example embodiment. In the example of FIGURE 4D, apparatus 432 comprises display 434. Apparatus 432 may be a primary apparatus, a secondary apparatus, and/or the like. In the example of FIGURE 4D, image 436 is displayed on display 434 of apparatus 432. In the example of FIGURE 4D, image 436 is a related image that is related to image 428 of FIGURE 4C. For example, a related image sharing session between apparatus 422 of FIGURE 4C and apparatus 432 of FIGURE 4D may have been established. In such an example, a relationship criteria may have been determined based, at least in part, on metadata associated with image 428 of FIGURE 4C. In such an example, apparatus 432 of FIGURE 4D may have been identified based, at least in part, on image 436 of FIGURE 4D corresponding with the relationship criteria. In at least one example embodiment, apparatus 432 may display more than one related image in addition to image 436, may display a portion of a related, and/or the like. Although apparatus 432 is depicted in landscape mode, apparatus orientation and/or display orientation may vary.

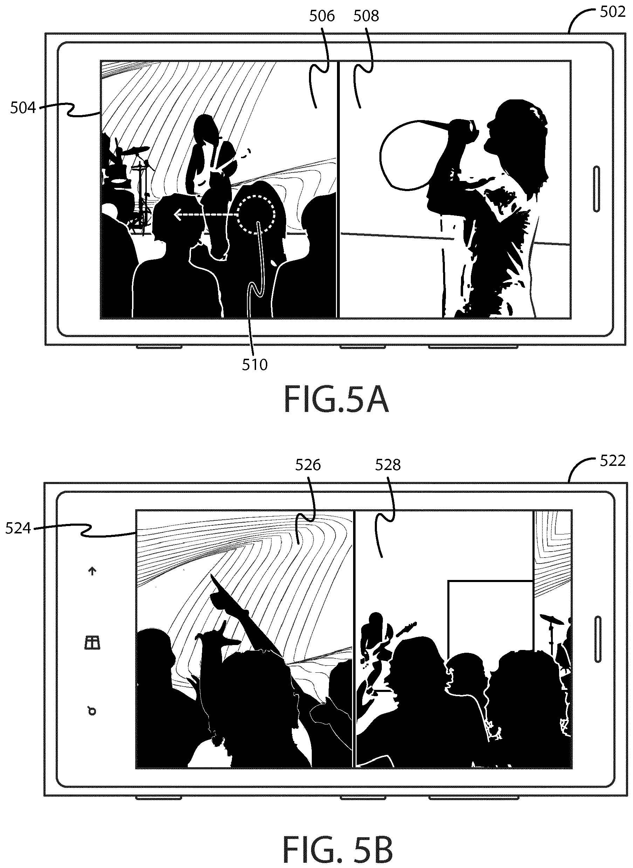

FIGURES 5A-5B are illustrations showing display of an image according to at least one example embodiment. The examples of FIGURES 5A-5B are merely examples and do not limit the scope of the claims. For example, apparatus design may vary, representations may vary, notifications may vary, display of images may vary, input type and/or orientation may vary, image transition may vary, and/or the like.

In some circumstances, users of two or more apparatuses associated with an established related image sharing session may desire to synchronize browsing of images associated with each respective apparatus. For example, an apparatus may control switching of images, and another apparatus may switch images at a similar rate, may switch images in synchronization, and/or the like. For example, an apparatus may switch from displaying an image to displaying another image. In such an example, based, at least in part, on the switch to displaying the other image, a different apparatus may also switch from displaying a related image to displaying another related image. In at least one example embodiment, an apparatus that controls the speed at which images are switched is a primary apparatus. In at least one example embodiment, an apparatus that switches display of images based on the primary apparatus is a secondary apparatus.

In at least one example embodiment, an apparatus receives information indicative of an image change input. The image change input is an input that indicates a desire to terminate display of an image and cause display of another image that corresponds with the relationship criteria. In at least one example embodiment, the image change input is a swipe input. In at least one example embodiment, a swipe input from right to left is associated with termination of display of an image and causation of display of the next image identified by an image order list. In at least one example embodiment, a swipe input from left to right is associated with termination of display of an image and causation of display of a previous image identified an image order list. In at least one example embodiment, an apparatus determines an image to cause display of based, at least in part, on an image order list. The image order list, for example, may identify an order in which images are arranged for display, sequenced for display, and/or the like. For example, an image change input from right to left may indicate causation of display of the next image in an image order list sequence, and an image change input from left to right may indicate causation of display of the previous image in the image order list sequence. In at least one example embodiment, an image order list indicates a sequence in which images are displayed, such that an image and an image that is next in an image order list sequence are adjacent within the image order list.

In some circumstances, a user may desire to rearrange a sequence of images identified in an image order list. For example, the user may desire to move an image to the front of the image order list such that the image is next in line for display, may desire to move an image to the end of the image order list such that the image is last in line for display, and/or the like.

In at least one example embodiment, an apparatus receives information indicative of an image order list change input. The image order list change input may, for example, be an input that indicates an image to swap for another image in the image order list. For example, an image order list change input may indicate swapping the first image in sequence with the last image in sequence. The image order list change input may, for example, be an input that indicates an image to remove from the image order list. For example, an order list change input may indicate removal of a second image in sequence such that the second image will be precluded from display. The image order list change input may, for example, be an input that indicates an image to add to the image order list. For example, an order list change input may indicate addition of an image at a first in sequence position within the image order list such that the image is the next image in sequence for display. The image order list change input may, for example, be an input that indicates an image to move from a current position and to a new position within the image order list. For example, an order list change input may indicate moving of an image at a first in sequence position within the image order list to a second in sequence position within the image order list.

In at least one example embodiment, an apparatus determines a different image order list based, at least in part, on the image order list change input. In some circumstances, a user may desire to have an image order list automatically sorted. For example, the user may desire to have images sorted in chronological order, reverse chronological order, geographical proximity order, reverse geographical proximity order, alphabetically by subject matter, and/or the like. In at least one example embodiment, an apparatus determines an image order list based, at least in part, on a sort criteria. The sort criteria may, for example, correlate with metadata associated with the images to be sorted. In such an example, a position of an image within the image order list may be based, at least in part, on metadata associated with the image.

In at least one example embodiment, an apparatus causes display of another image based, at least in part, on an image change input. In such an example embodiment, the other image may be another related image. In such an example embodiment, an apparatus causes sending of information indicative of an image change directive to a separate apparatus based, at least in part, on the image change input. The image change directive, for example, may direct the separate apparatus to terminate display of an image and cause display of another image, may identify another image to display within an image order list associated with the separate apparatus, and/or the like. The separate apparatus may, for example, be a server, a primary apparatus, a secondary apparatus, a service platform, and/or the like. In at least one example embodiment, a server and/or apparatus receives information indicative of an image change directive from the primary apparatus. In such an example embodiment, the server may cause sending of the image change directive to a secondary apparatus based, at least in part, on receipt of the image change directive from the primary apparatus. In at least one example embodiment, a secondary apparatus receives information indicative of an image change directive from a server, a primary apparatus, an image change input associated with the secondary apparatus, and/or the like. In such an example embodiment, the secondary apparatus causes display of a different related image that corresponds with the relationship criteria based, at least in part, on the image change directive.

In the examples of FIGURES 5A and 5B, two apparatuses are illustrated in mid-transition from displaying of an image to displaying of another image. Apparatus 502 of FIGURE 5A may be a primary apparatus, and apparatus 522 of FIGURE 5B may be a secondary apparatus. In the example of FIGURE 5A, apparatus 502 comprises display 504 and is displaying image 506 and image 508 on display 504. In the example of FIGURE 5B, apparatus 522 comprises display 524 and is displaying image 526 and image 528 on display 524. In the example of FIGURE 5A, apparatus 502 has received information indicative of input 510 associated with image 506. In the example of FIGURE 5A, input 510 is an image change input associated with image 506 that indicates termination of display of image 506 and causation of display of image 508. Based, at least in part, on receipt of input 510, apparatus 502 may cause sending of an image change directive to a server, a separate apparatus, a secondary apparatus, and/or the like. For example, apparatus 502 of FIGURE 5A, may send an image change directive to apparatus 522. In such an example, the image change directive may indicate termination of display of image 526 of FIGURE 5B and causation of display of image 528 of FIGURE 5B. In effect, input 510 associated with apparatus 502 of FIGURE 5A causes a change in the images being displayed by both apparatus 502 of FIGURE 5A and apparatus 522 of FIGURE 5B.

In at least one example, a user of an apparatus may desire to automatically progress through display of images identified in an image order list. For example, the user may desire to view the images in a conventional slideshow format. In such an example, each image may be displayed for a predetermined duration, a specific number of images may be displayed within a predetermined duration, and/or the like. In at least one example embodiment, an apparatus receives information indicative of an image display interval setting input. The image display interval setting input may, for example, identify an image display interval. For example, an image may be displayed for a time duration equal to the image display interval. In such an example embodiment, upon elapse of the image display interval, another image may be caused to be displayed, display of the image may be terminated, and/or the like. In at least one example embodiment, an apparatus determines that an image display interval has elapsed. In such an example embodiment, an apparatus may cause display of another image based, at least in part, on determination that the image display interval has elapsed.

In some circumstances, it may be desirable to enforce an image display interval at a separate apparatus. In at least one example embodiment, an apparatus causes sending of information indicative of the image display interval to a separate apparatus. The image display interval may indicate a time associated with display of an image. For example, the apparatus may cause sending of information indicative of the image display interval to a server, to a secondary apparatus, and/or the like. In at least one example embodiment, an apparatus receives information indicative of an image display interval from another apparatus. In such an example embodiment, the apparatus may determine that the image display interval has elapsed, and may cause sending of an image change directive to one or more separate apparatuses based, at least in part, on determination that the image display interval has elapsed. For example, an image display interval may indicate a 30 second display interval. Upon elapsing of 30 seconds, the apparatus may terminate display of an image, may cause display of another image, may cause sending of an image change directive to a separate apparatus, and/or the like.

In some circumstances, a user of a secondary apparatus may desire to spend more time viewing each image, may desire to spend less time viewing each image, and/or the like. For example, since a user of a primary apparatus may control the speed at which images are displayed, the user of the secondary apparatus may desire the ability to have his or her requests noted and/or addressed. In at least one example embodiment, an apparatus receives information indicative of an image interval change input. In such an example embodiment, the apparatus may cause sending an image interval change request to a separate apparatus based, at least in part, on the image interval change input. For example, the apparatus may cause sending of the image interval change request to a server, to a primary apparatus, and/or the like.

In at least one example embodiment, an apparatus receives information indicative of an image interval change request from a separate apparatus, and causes of display of an image interval change request notification based, at least in part, on the image interval change request. The apparatus may receive the information indicative of an image interval change request from a server, from a secondary apparatus, and/or the like. In at least one example embodiment, an image interval change request indicates a decrease in an interval between image change inputs, and the image interval change request notification comprises information indicative of the requested decrease in the interval. In at least one example embodiment, an image interval change request indicates an increase in an interval between image change inputs, and the image interval change request notification comprises information indicative of the requested increase in the interval. In at least one example embodiment, an image interval change request indicates a decrease in an image display interval, and the image interval change request notification comprises information indicative of the requested decrease in the image display interval. In at least one example embodiment, an image interval change request indicates an increase in an image display interval, and the image interval change request notification comprises information indicative of the requested increase in the image display interval.

An image interval change request may indicate a request associated with changing of an image display interval, may indicate a request associated with changing of an interval associated with sending of image change directives, may be associated with changing of an interval associated with image change inputs, and/or the like. For example, a user of a primary apparatus may be changing images every one second. In such an example, a user of a secondary apparatus may find that this image change interval is too fast and may desire to communicate his or her desire to have the image change interval increased to a duration that allows the user of the secondary apparatus to fully experience the images as they are displayed.

FIGURE 5A is an illustration showing an image change input according to at least one example embodiment. In the example of FIGURE 5A, apparatus 502 is a primary apparatus. In the example of FIGURE 5A, apparatus 502 comprises display 504 and is displaying image 506 and image 508 on display 504. The example of FIGURE 5A illustrates apparatus 502 in mid-transition from displaying of image 506 to displaying of image 508. In the example of FIGURE 5A, apparatus 502 has received information indicative of input 510 associated with image 506. In the example of FIGURE 5A, input 510 is an image change input associated with image 506 that indicates termination of display of image 506 and causation of display of image 508. Based, at least in part, on receipt of input 510, apparatus 502 may cause sending of an image change directive to a server, a separate apparatus, a secondary apparatus, and/or the like. For example, apparatus 502 of FIGURE 5A, may send an image change directive to apparatus 522. In such an example, the image change directive may indicate termination of display of image 526 of FIGURE 5B and causation of display of image 528 of FIGURE 5B. In effect, input 510 associated with apparatus 502 of FIGURE 5A may cause a change in the images being displayed by both apparatus 502 of FIGURE 5A and apparatus 522 of FIGURE 5B. Although FIGURE 5A illustrates a right to left direction associated with input 510, input direction and/or orientation may vary. Although image 508 is illustrated as transitioning onto display 504 from the right to the left, transitions associated with display of images may vary. One or more images may be displayed on display 504 in addition to images 506 and 508.

FIGURE 5B is an illustration showing an image change directive according to at least one example embodiment. In the example of FIGURE 5B, apparatus 522 is a secondary apparatus. In the example of FIGURE 5B, apparatus 522 comprises display 524 and is displaying image 526 and image 528 on display 524. The example of FIGURE 5B illustrates apparatus 522 in mid-transition from displaying of image 526 to displaying of image 528. Although image 528 is illustrated as transitioning onto display 524 from the right to the left, transitions associated with display of images may vary. One or more images may be displayed on display 524 in addition to images 526 and 528.

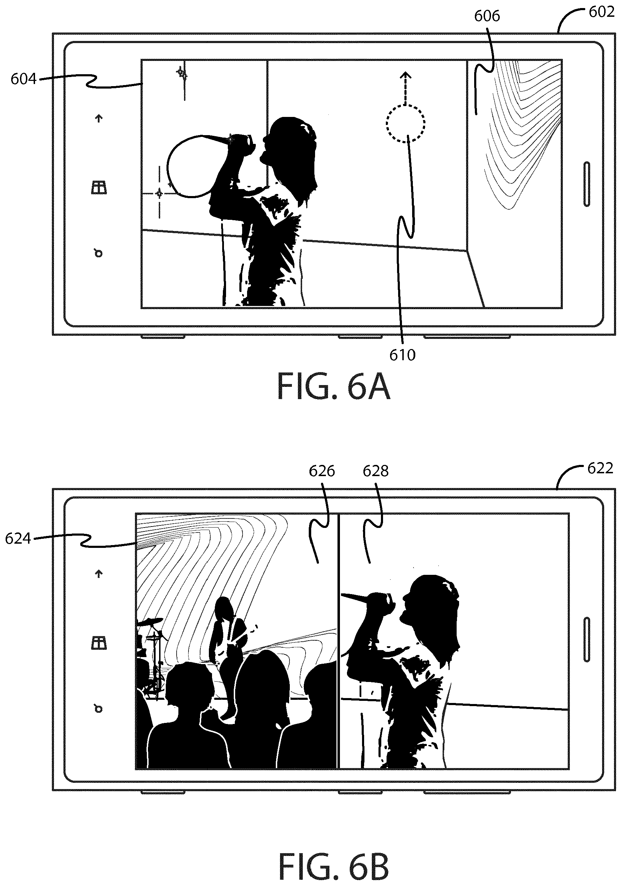

FIGURES 6A-6B are illustrations showing sending of an image according to at least one example embodiment. The examples of FIGURES 6A-6B are merely examples and do not limit the scope of the claims. For example, apparatus design may vary, representations may vary, display of images may vary, input type and/or orientation may vary, image transition may vary, and/or the like.

In order to promote the collaborative and social experiencing of images, it may be desirable to allow a user to share an image with another user, to allow the other user to share an image with the user, and/or the like. For example, two friends may have attended the same heavy metal concert, but may have captured images depicting different bands or different parts of each band's set. One of the friends may desire to share an image with the other, the friends may desire to swap images with each other, and/or the like. In at least one example embodiment, an apparatus receives information indicative of an image sharing input associated with an image. In such an example embodiment, the apparatus may cause sending the image to a separate apparatus based, at least in part, on the image sharing input. For example, sending the image to a separate apparatus may be caused by the image sharing input. In at least one example embodiment, an image sharing input is associated with a portion of an image. For example, a user may zoom in on a particular portion of the image and desire to share the portion of the image with a separate apparatus. In such an example embodiment, the apparatus may share only the portion of the image that is being displayed on the apparatus. In at least one example embodiment, an apparatus causes sending of information indicative of an image sharing directive associated with the image to a separate apparatus based, at least in part, on the image sharing input. For example, a primary apparatus may cause sending of information indicative of an image sharing directive associated with the image to a server, to a secondary apparatus, and/or the like. A secondary apparatus may cause sending of information indicative of an image sharing directive associated with the image to a server, to a primary apparatus, and/or the like. In at least one example embodiment, an image sharing input is a swipe input associated with the image to be sent to the separate apparatus.

In at least one example embodiment, an apparatus receives an image sharing directive. In such an example embodiment, sending of the image to a separate apparatus is based, at least in part, on the image sharing directive associated with the image. In at least one example embodiment, an apparatus causes sending of an image to a secondary apparatus. In at least one example embodiment, an apparatus causes sending of an image to a primary apparatus. In some circumstances, a primary apparatus may perform activities associated with a server. For example, the primary apparatus may cause sending of the image to the secondary apparatus based, at least in part, on correspondence between the image and the relationship criteria. In at least one example embodiment, an apparatus receives a related image that corresponds with a relationship criteria. In such an example embodiment, the apparatus may cause display of the related image. For example, the apparatus may terminate display of a different related image and may cause display of the related image.

In some circumstances, a user may desire further synchronization of viewing experiences associated with a related image sharing session. For example, the user may view a particular image and desire to share the image with a separate apparatus. In such an example, the user may zoom into a specific portion of the image. For example, the user may zoom in on a particular person in the image. In such an example, display of the image on the apparatus and the separate apparatus may be synchronized such that panning the image, zooming in on the image, rotating the image, and/or the like with respect to the apparatus may be replicated on the separate apparatus.

In some circumstances, it may be desirable to avoid immediate display of a received image. For example, a user of an apparatus may be in the middle of viewing a set of related images and may desire to continue viewing of such images without interruption. In such an example, a received image may be placed at a suitable position within an image order list. In at least one example embodiment, an apparatus determines an image order list based, at least in part, on a sort criteria. In such an example, causation of display of another related image may be based, at least in part, on the image order list. In at least one example embodiment, a received image is identified at a position within an image order list based, at least in part, on the sort criteria associated with the image order list and metadata associated with the received image. For example, an apparatus may receive a related image and another related image. In at least one example embodiment, a sort criteria indicates a characteristic of metadata associated with the related image and the other related image. An order of display of the related image and the other related image may be based, at least in part, on the image order list. In such an example, the determination of the image order list may be based, at least in part, the sort criteria, metadata associated with the related image, and metadata associated with the other related image. As such, the related image and the other related image will be identified at two positions within the image order list based, at least in part, on metadata associated with the related image and the other related image.

In some circumstances, a user may desire to reciprocally share images with another user. For example, if a user receives a related image from another user, the user may automatically and reciprocally share a different related image with the other user. In at least one example embodiment, an apparatus causes sending of a different related image that corresponds with the relationship criteria to the primary apparatus based, at least in part, on receipt of the other related image that corresponds with the relationship criteria. In at least one example embodiment, identification of the different related image may be based, at least in part, on an input that identifies the different related image as the image for sending to the separate apparatus. For example, an image sharing input associated with the different related image may cause sending of the different related image to the separate apparatus. In such an example, the identification of the different related image may be such that the identified different related image corresponds with the relationship criteria associated with the related image sharing session between the apparatus and the other apparatus.

FIGURE 6A is an illustration showing an image sharing input according to at least one example embodiment. In the example of FIGURE 6A, apparatus 602 comprises display 604 and is displaying image 606 on display 604. In the example of FIGURE 6A, apparatus 602 receives information indicative of input 610. In the example of FIGURE 6A, input 610 is an image sharing input associated with image 606. In the example of FIGURE 6A, apparatus 602 may cause sending of image 606 to a separate apparatus based, at least in part, on receipt of input 610 associated with image 606. Although input 610 is depicted as a swipe input in a down to up direction, the orientation and/or direction associated with input 610 may vary. Although apparatus 602 is depicted in landscape mode, apparatus orientation and/or display orientation may vary.

FIGURE 6B is an illustration showing display of an image according to at least one example embodiment. In the example of FIGURE 6B, apparatus 622 comprises display 624 and is displaying image 626 and 628 on display 624. In the example of FIGURE 6B, apparatus 622 is mid-transition between display of image 626 and display of image 628. As depicted in the examples of FIGURE 6A and FIGURE 6B, image 628 corresponds with image 606 of FIGURE 6A. For example, apparatus 622 may be displaying image 628 on display 624 based, at least in part, on receipt of input 610 associated with image 606 at apparatus 602 of FIGURE 6A. For example, input 610 may have caused apparatus 602 to send image 606 to apparatus 622. Although apparatus 622 is depicted in landscape mode, apparatus orientation and/or display orientation may vary.

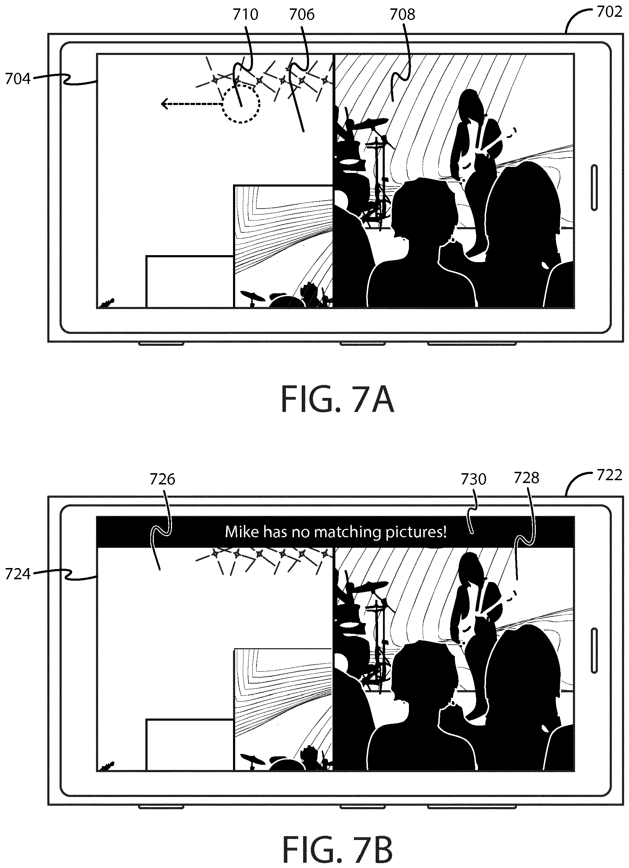

FIGURES 7A-7B are illustrations showing display of an image according to at least one example embodiment. The examples of FIGURES 7A-7B are merely examples and do not limit the scope of the claims. For example, apparatus design may vary, representations may vary, notifications may vary, display of images may vary, input type and/or orientation may vary, image transition may vary, and/or the like.

In order to facilitate providing of similar image viewing experiences for two or more users participating in a related image sharing session, it may be desirable to avoid early termination of a related image sharing session, to preclude browsing to an image that fails to correspond to a related images associated with another apparatus, and/or the like. For example, a primary apparatus may be associated with five images associated with a first event and five images associated with a second event. In such an example, a secondary apparatus may be associated with four images associated with the first event and no images associated with the second event. In such an example, it may be desirable to draw a primary apparatus user's attention to the possibility of navigating to an image that does not have a related image counterpart associated with the secondary apparatus.

In at least one example embodiment, an apparatus receives information indicative of an image change directive. In such an example embodiment, if the apparatus fails to identify a related image, the apparatus may cause sending of information indicative of failure to identify a related image. In at least one example embodiment, an apparatus receives information indicative of failure to identify a different related image from the separate apparatus. In such an example embodiment, the apparatus may cause display of a representation of a related image warning notification based, at least in part, on receipt of information indicative of the separate apparatus failing to identify the different related image. The related image warning notification may, for example, indicate that the separate apparatus fails to identify a different image that corresponds with the relationship criteria.

In some circumstances, a user may wish to continue on with a related image sharing session notwithstanding an indication that a separate apparatus failed to identify a related image that corresponds with a given relationship criteria. For example, the user may desire to share a different image with the separate apparatus, to browse to a different image, to select a different image for sharing, to view a different related image, and/or the like, such that the related image sharing session is maintained with the separate apparatus. For example, an apparatus may cause display of a representation of a related image warning notification indicating that a separate apparatus does not have a related image that corresponds with the browsed to image and/or relationship criteria associated with the related image sharing session. In such an example, the apparatus may prompt the user to select for display and/or sharing with the separate apparatus a different image that corresponds with the relationship criteria, that fails to correspond with the relationship criteria, that was captured at a location geographically proximate to the image, and/or the like, such that the related image sharing session continues. In another example, the apparatus may allow the user to select a different image for within a predetermined amount of time from display of the related image warning notification such that the related image sharing session continues.

In at least one example embodiment, if a primary apparatus displays an image and a secondary apparatus fails to be associated with a related image, the related image sharing session between the primary apparatus and the secondary apparatus may terminate. In such an example embodiment, receipt of information indicative of an image change input subsequent to display of a representation of a related image warning notification may cause termination of the related image sharing session based, at least in part, on the image change input. The other image change input may be a new image change input, a continuation of a previous image change input, a continuation of a drag motion associated with the image change input, and/or the like.

FIGURE 7A is an illustration showing an image change input according to at least one example embodiment. In the example of FIGURE 7A, apparatus 702 comprises display 704 and is displaying image 706 and image 708 on display 704. In the example of FIGURE 7A, apparatus 702 has received input 710 associated with image 706. In the example of FIGURE 7A, input 710 is an image change input associated with image 706. For example, input 710 may indicate termination of display of image 706 and causation of display of image 708 by apparatus 702. Although input 710 is depicted as a swipe input in a right to left direction, the orientation and/or direction associated with input 710 may vary. Although apparatus 702 is depicted in landscape mode, apparatus orientation and/or display orientation may vary.

FIGURE 7B is an illustration showing display of a related image warning notification according to at least one example embodiment. In the example of FIGURE 7B, apparatus 722 comprises display 724 and display image 726 and image 728 on display 724. In the example of FIGURE 7B, apparatus 722 corresponds with apparatus 702 of FIGURE 7A. In the example of FIGURE 7B, apparatus 722 has received information indicative of a separate apparatus associated with a related image sharing session failing to identify a related image associated with image 728. In the example of FIGURE 7B, notification 730 is displayed based, at least in part, on the receipt of information indicative of the separate apparatus associated with the related image sharing session failing to identify a related image associated with image 728. In the example of FIGURE 7B, notification 730 is a representation of a related image warning notification that indicates that the separate apparatus has failed to identify a different image that corresponds with the relationship criteria. In the example of FIGURE 7B, continuation of input 710 associated with image 706 of FIGURE 7A, receipt of a new image change input associated with image 726, and/or the like, may cause termination of the related image sharing session between apparatus 722 and the separate apparatus.

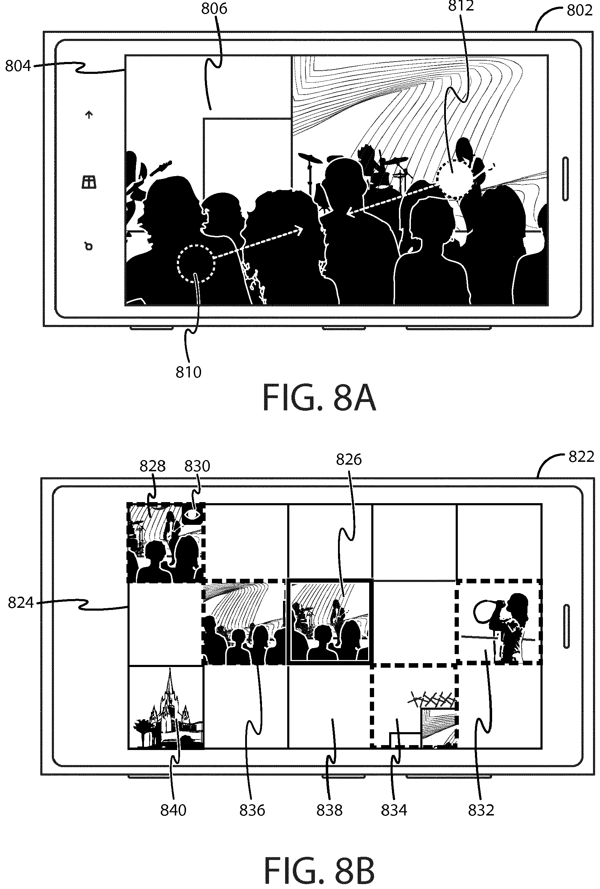

FIGURES 8A-8B are illustrations showing display of an image according to at least one example embodiment. The examples of FIGURES 8A-8B are merely examples and do not limit the scope of the claims. For example, apparatus design may vary, representations may vary, display of images may vary, input type and/or orientation may vary, row count may vary, column count may vary, and/or the like.

In some circumstances, a user may desire to view one or more related images in a manner that allows for understanding of spatial characteristics associated with the related images. For example, the user may desire to view the related images in such a way that allows the user to quickly and intuitively identify locational relationships between the related images, to conveniently identify and/or view related points of interest geographically proximate to a location associated with the related images, and/or the like.

FIGURE 8A is an illustration showing an image grid view input according to at least one example embodiment. In the example of FIGURE 8A, apparatus 802 is a primary apparatus, a secondary apparatus, and/or the like. In the example of FIGURE 8A, apparatus 802 comprises display 804 and is displaying image 806 via display 804. Image 806 may be a picture, a related image, a photograph, a related image received from a separate apparatus, and/or the like.

In order to facilitate viewing of one or more related images in a manner that allows for understanding of spatial characteristics associated with the related images, it may be desirable to cause display of the related images in such a way that the display arrangement of the related images conveys one or more spatial characteristics associated with the related images. For example, a user may be viewing image 806 by way of display 804 of apparatus 802. In such an example, image 806 may correspond with a particular relationship criteria. In such an example, the user may desire to view related images that also correspond with the relationship criteria. For example, the user may desire to view related image that were captured at approximately the same location as image 806 and in a manner that allows the user to intuitively identify locational relationships between image 806 and one or more related images. In at least one example embodiment, an apparatus receives information indicative of an image grid view input. For example, the image grid view input may indicate a desire to view the image, the related images, etc. in a grid view. In at least one example embodiment, an image grid view input is a pinch input. In such an example embodiment, the pinch input may comprise two simultaneous swipe inputs, such that the drag motion associated with each swipe input approximately trend towards a point of convergence. As illustrated in the example of FIGURE 8A, the drag motions associated with inputs 810 and 812 are such that two fingers associated with inputs 810 and 812 are brought closer to each other and move in a pinching motion toward a point of convergence. In the example of FIGURE 8A, inputs 810 and 812 are swipe inputs. Together, inputs 810 and 812 comprise a pinch input associated with image 806.

FIGURE 8B is an illustration showing a grid view according to at least one example embodiment. In the example of FIGURE 8B, apparatus 822 is a primary apparatus, a secondary apparatus, and/or the like. In the example of FIGURE 8B, apparatus 822 comprises display 824 and is displaying images 826, 828, 832, 834, 836, and 840 via display 804. The example of FIGURE 8B corresponds with the example of FIGURE 8A subsequent to receipt of information indicative of an image grid view input. In the example of FIGURE 8B, image 826 corresponds with image 806 of FIGURE 8A. In the example of FIGURE 8B, image 826 corresponds with a particular relationship criteria. For example, image 826 corresponds with a relationship criteria identifying a time, a location, and/or subject matter associated with a heavy metal concert. In the example of FIGURE 8B, images 828, 832, 834, and 836 are related images that correspond with the relationship criteria. For example, images 828, 832, 834, and 836 correspond with the relationship criteria identifying the time, the location, and/or the subject matter associated with the heavy metal concert. In the example of FIGURE 8B, images 828, 832, 834, and 836 are surrounded by a dashed border indicating that images 828, 832, 834, and 836 are related images associated with a separate apparatus, received from a separate apparatus, shared by a different user, and/or the like. Although the example of FIGURE 8B depicts a dashed border surrounding images 828, 832, 834, and 836, visual representations associated with identification and/or characterization of images 828, 832, 834, and 836 may vary.

In at least one example embodiment, an apparatus causes display of a representation of related images in a grid view. A grid view, for example, relates to a view in which related images are arranged within rows and columns of a grid. In at least one example embodiment, an apparatus causes display of a representation of an image and a representation of at least one related image in relation to the grid view. In such an example embodiment, the display of the representation of an image and the representation of the related image may be based, at least in part, on an image grid view input. For example, the display of the representation of an image and the representation of the related image may be caused by the image grid view input.

In order to facilitate intuitive identification of spatial characteristics and/or locational relationships between the displayed related images, it may be desirable to position the related imaged within the rows and columns of the grid view based, at least in part, on location-related metadata associated with the related images. In at least one example embodiment, an image associated with an image grid view input is caused to be displayed in approximately the center of a grid view. For example, as illustrated in the example of FIGURE 8B, image 826 is displayed in the center of the grid view. In such an example, image 826 corresponds with image 806 of FIGURE 8A, image 806 of FIGURE 8A being associated with the image grid view input resulting in the display of the grid view in the example of FIGURE 8B. In the example of FIGURE 8B, image 826 is surrounded by a solid border indicating that image 826 is the related image associated with the image grid view input. Although the example of FIGURE 8B depicts a solid border surrounding image 826, visual representations associated with identification and/or characterization image 826 may vary. In at least one example embodiment, the related image associated with the image grid view input may be identified as a central image. In the example of FIGURE 8B, related images are displayed in the grid view according to location-related metadata associated with each respective related image. For example, a related image is positioned within the grid view and displayed according to the related image's location relative to the image associated with the image grid view input. For example, a related image associated with a location to the north of the image associated with the image grid view input may be displayed a position above the image. For example, a related image associated with a location to the west of the image associated with the image grid view input may be displayed a position to the left of the image. In at least one example embodiment, proximity between an image and another image in a grid view indicates a relative proximity between a location associated with the image and a location associated with the other image. In at least one example embodiment, a grid view may be scrolled such that the grid view is updated to display different related images associated with locations in the direction of the scrolling. For example, the grid view may be scrolled from right to left such that the grid view is updated to display related images associated with location-related data indicating relative locations further to the east of the image associated with the image grid view input.

In the example of FIGURE 8B, image 828 is displayed at the top left of the grid view based, at least in part, on image 828 being associated with a location approximately to the northwest of image 826. In the example of FIGURE 8B, image 836 is displayed to the left of image 826 based, at least in part, on image 836 being associated with a location approximately to the west of image 826. In the example of FIGURE 8B, image 836 is positioned in the grid view closer to image 826 than image 828 based, at least in part, on image 836 being associated with a location that is closer to a location associated with image 826 than a location associated with image 828. In the example of FIGURE 8B, image 832 is displayed to the far right of image 826 based, at least in part, on image 832 being associated with a location approximately to the east of image 826. In the example of FIGURE 8B, image 832 is positioned in the grid view further from image 826 than image 836 based, at least in part, on image 832 being associated with a location that is further from a location associated with image 826 than a location associated with image 836. In the example of FIGURE 8B, image 834 is displayed to the far right of image 826 based, at least in part, on image 834 being associated with a location approximately to the southeast of image 826.

In some circumstances, a user may desire to know what image another user is viewing at a particular moment. For example, the user may desire to view the image that the other user is viewing, may desire to share with the other user images related to the image that the other user is viewing, and/or the like. In at least one example embodiment, an apparatus receives information indicative of an image viewing indication associated with a related image. The image viewing indication may, for example, identify that the related image is being viewed by another user, that the related image was recently viewed by another user, that the related image has been viewed by another user, and/or the like. In at least one example embodiment, an apparatus causes display of a representation of an image viewing indication in relation to a related image. The representation of the image viewing indication may be a visual representation that identifies to a user a related image that is being viewed by another user, a related image that was recently viewed by another user, a related image that has been viewed by another user, and/or the like. In the example of FIGURE 8B, indication 830 is an image viewing indication associated with image 828. For example, indication 830 may identify image 828 to the user of apparatus 822 as a related image that is being viewed by another user, a related image that was recently viewed by another user, a related image that has been viewed by another user, and/or the like. If, for example, the other user terminates viewing of image 828, display of indication 830 in relation to image 828 may terminate. In such an example, if the other user begins viewing of image 834, indication 830 may be caused to be displayed in relation to image 834.

In some circumstances, a user may desire to have unallocated positions within the grid view to be populated by relevant images. For example, the user may desire to view images associated with points of interest that are geographically proximate to a specific image, a specific location associated with the image, and/or the like. In at least one example embodiment, an unallocated position within a grid view may be associated with display of a point of interest image. A point of interest image may, for example, be an image, a representation, etc. depicting a particular point of interest. A point of interest image may be a representation of a map depicting a location of a point of interest, a representation of a three dimensional model depicting the point of interest, a representation of a two dimensional picture depicting the point of interest, and/or the like. In at least one example embodiment, a point of interest image may be shared with another user. For example, the point of interest image may be caused to be sent to a separate apparatus based, at least in part, on an image sharing input associated with the point of interest image. In the example of FIGURE 8B, grid position 838 may be allocated for display of a point of interest image associated with a point of interest geographically located at a position approximately south of the location associated with image 826. In the example of FIGURE 8B, image 840 is a representation of a three dimensional model of a church. The church may, for example, be at a geographical location approximately to the southwest of the location associated with image 826.

In some circumstances, a user may desire to view related images in such a manner that allows for intuitive understanding of a chronological relationship between the related images. In at least one example embodiment, a position of a related image within a grid view may be based, at least in part, on a temporal characteristic associated with the related image. For example, a related image associated with an earlier time of capture than a different related image may be displayed at a position within the grid view to the left of the different related image, above the different related image, to the right of the different related image, below the different related image, and/or the like.

In some circumstances, a user may desire to view additional related images associated with a point of interest depicted in a related image. For example, a point of interest may be depicted in a point of interest image. In at least one example embodiment, an apparatus receives information indicating selection of the point of interest image and causes display of related images associated with the point of interest. In at least one example embodiment, the information indicating selection of the point of interest image is a tap input associated with the point of interest image. In at least one example embodiment, the tap input associated with a point of interest image is a touch screen input at a position that corresponds with a position of a point of interest image. For example, based on receipt of information indicating selection of a point of interest image depicting a particular point of interest, the apparatus may cause display of additional related images that depict the particular point of interest. The additional related images that depict the particular point of interest may be received from at least one memory of the apparatus, may be received from one or more separate apparatuses, may be received from a server, such as a service platform, central repository, etc., and/or the like. In at least one example embodiment, an apparatus causes display of one or more additional point of interest images in a grid view based, at least in part, on receipt of information indicating selection of a point of interest image related to the additional point of interest images. In at least one example embodiment, an apparatus causes display of additional point of interest images such that the additional point of interest images are positioned around a central grid view position that corresponds with a location of the apparatus. The additional point of interest images, for example, may depict a point of interest from multiple orientations and/or perspectives, may depict a point of interest at multiple points in time, may depict multiple events associated with a point of interest, and/or the like.

In some circumstances, a user viewing related images by way of a secondary apparatus may desire a grid view to be updated based, at least in part, on viewing activities associated with a primary apparatus that may be controlling a related image sharing session between the secondary apparatus and the primary apparatus. For example, the user of the secondary apparatus may be viewing related images by way of a grid view. In such an example, an image depicted at the center of the grid view may relate to the image being viewed by a user of the primary apparatus. In at least one example embodiment, a grid view associated with a secondary apparatus is caused to be updated based, at least in part, on changing of the image being displayed by a primary apparatus. For example, the image positioned at the center of a grid view may be updated on a secondary apparatus to correspond with the image being displayed by a primary apparatus. In such an example, the related images positioned within the grid view may be caused to be updated based, at least in part, on display of a different image by a primary apparatus. In at least one example embodiment, an apparatus displays a related image received from a separate apparatus at a position within the grid view that corresponds with a location associated with the related image, a time associated with the related image, subject matter associated with the related image, and/or the like.

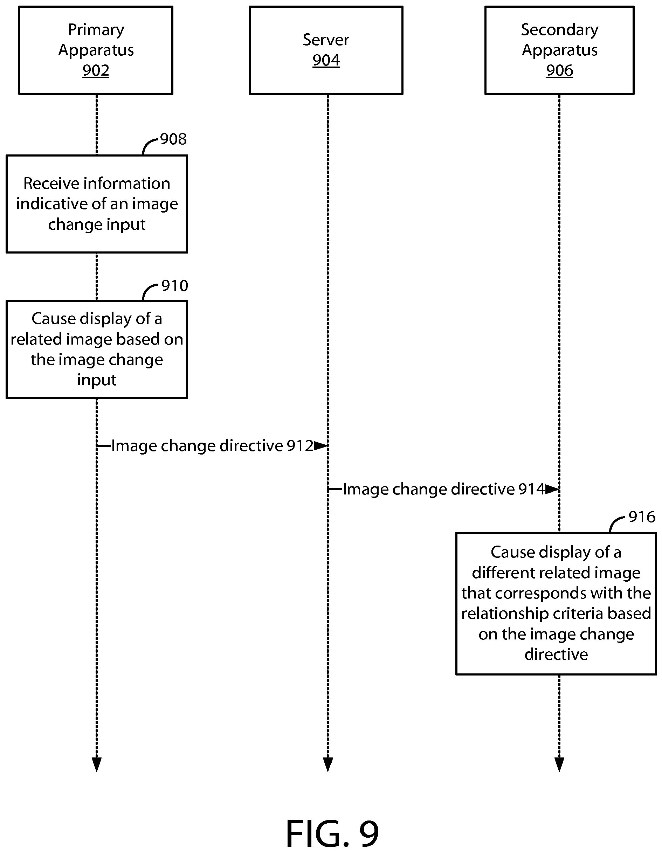

FIGURE 9 is an interaction diagram illustrating activities associated with sending of an image change directive according to at least one example embodiment. In at least one example embodiment, there is a set of operations that corresponds with, at least some of, the activities of FIGURE 9. For example, there may be a set of operations associated with activities of one or more apparatuses of FIGURE 9. An apparatus, for example electronic apparatus 10 of FIGURE 1, or a portion thereof, apparatus 202 of FIGURE 2, or a portion thereof, server 204 of FIGURE 2, or a portion thereof, or apparatus 206 of FIGURE 2, or a portion thereof, may utilize the set of operations. In at least one example embodiment, primary apparatus 902 performs, at least some of, the activities associated with server 904 of FIGURE 9. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform at least part of the set of operations of FIGURE 9.

As previously discussed, in some circumstances, a user may desire to socially view one or more images, related images, and/or the like, with another user and in a synchronous manner. For example, a user may desire to synchronize viewing of images and/or related image with another user.

In the example of FIGURE 9, communication between primary apparatus 902, server 904, and secondary apparatus 906 may be similar as described regarding FIGURE 2. Each of primary apparatus 902 and secondary apparatus 906 may be a phone, a tablet, a computer, a laptop, an electronic apparatus, and/or the like. Server 904 may be a computer, a service platform, a repository, an application, and/or the like. In at least one example embodiment, the activities illustrated in the example of FIGURE 9 may occur subsequent to the activities illustrated in the example of FIGURE 3. For example, block 908 may occur subsequent to block 328 of FIGURE 3.

At block 908, primary apparatus 902 receives information indicative of an image change input. The receipt and the image change input may be similar as described regarding FIGURE 2, FIGURE 3, FIGURES 5A-5B, and FIGURES 7A-7B.

At block 910, primary apparatus 902 causes display of a related image based, at least in part, on the image change input. The display, the causation of display, the related image, and the display of a related image based, at least in part, on the image change input may be similar as described regarding FIGURE 2, FIGURE 3, FIGURES 4A-4D, FIGURES 5A-5B, FIGURES 7A-7B, and FIGURES 8A-8B.

At interaction 912, primary apparatus 902 causes sending of information indicative of an image change directive to server 904. In this manner, server 904 may receive information indicative of the image change directive from primary apparatus 902. In at least one example embodiment, primary apparatus 902 causes sending of information indicative of the image change directive directly to secondary apparatus 906. In this manner, secondary apparatus 906 may receive information indicative of the image change directive from primary apparatus 902. The sending, the causation of sending, and the image change directive may be similar as described regarding FIGURE 2, FIGURE 3, FIGURES 5A-5B, and FIGURES 7A-7B.

At interaction 914, server 904 causes sending of information indicative of the image change directive to secondary apparatus 906. In this manner, secondary apparatus 906 may receive information indicative of the image change directive from server 904. In at least one example embodiment, primary apparatus 902 causes sending of information indicative of the image change directive directly to secondary apparatus 906. In this manner, secondary apparatus 906 may receive information indicative of the image change directive from primary apparatus 902. The sending, the causation of sending, and the image change directive may be similar as described regarding FIGURE 2, FIGURE 3, FIGURES 5A-5B, and FIGURES 7A-7B.

At block 916, secondary apparatus 906 causes display of a different related image that corresponds with the relationship criteria based, at least in part, on the image change directive. The causation, the display, the different related image, the relationship criteria, and the correspondence with the relationship criteria may be similar as described regarding FIGURE 2, FIGURE 3, FIGURES 4A-4B, FIGURES 5A-5B, and FIGURES 7A-7B.

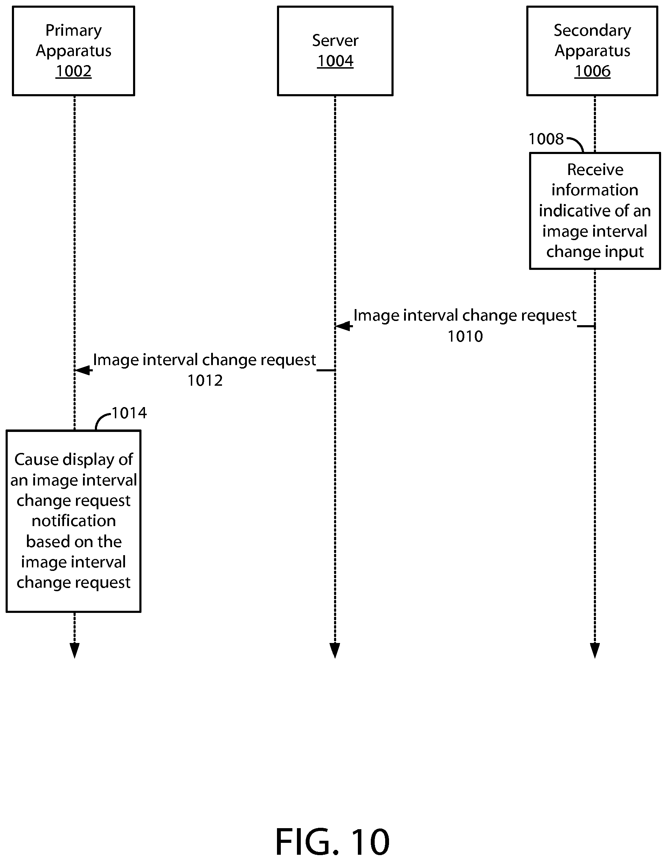

FIGURE 10 is an interaction diagram illustrating activities associated with sending of an image interval change request according to at least one example embodiment. In at least one example embodiment, there is a set of operations that corresponds with, at least some of, the activities of FIGURE 10. For example, there may be a set of operations associated with activities of one or more apparatuses of FIGURE 10. An apparatus, for example electronic apparatus 10 of FIGURE 1, or a portion thereof, apparatus 202 of FIGURE 2, or a portion thereof, server 204 of FIGURE 2, or a portion thereof, or apparatus 206 of FIGURE 2, or a portion thereof, may utilize the set of operations. In at least one example embodiment, primary apparatus 1002 performs, at least some of, the activities associated with server 1004 of FIGURE 10. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform at least part of the set of operations of FIGURE 10.

As previously discussed, in some circumstances, a user may desire to socially view one or more images, related images, and/or the like, with another user and in a synchronous manner. For example, a user may desire to synchronize viewing of images and/or related image with another user. In such an example, in order to fully experience each image and/or related image in a social manner, a user may desire to have an interval associated with display of each image and/or related image to be increased, decreased, and/or the like. For example, the user may desire to have each image displayed for a longer period of time, may desire to have each image displayed for a shorter period of time, and/or the like.

In the example of FIGURE 10, communication between primary apparatus 1002, server 1004, and secondary apparatus 1006 may be similar as described regarding FIGURE 2. Each of primary apparatus 1002 and secondary apparatus 1006 may be a phone, a tablet, a computer, a laptop, an electronic apparatus, and/or the like. Server 1004 may be a computer, a service platform, a repository, an application, and/or the like. In at least one example embodiment, the activities illustrated in the example of FIGURE 10 may occur subsequent to the activities illustrated in the example of FIGURE 3. For example, block 1008 may occur subsequent to block 328 of FIGURE 3.

At block 1008, secondary apparatus 1006 receives information indicative of an image interval change input. The receipt and the image interval change input may be similar as described regarding FIGURE 2, FIGURE 3, FIGURES 4A-4D, and FIGURES 5A-5B.

At interaction 1010, secondary apparatus 1006 causes sending of information indicative of an image interval change request to server 1004. In this manner, server 1004 may receive information indicative of the image interval change request from secondary apparatus 1006. In at least one example embodiment, secondary apparatus 1006 causes sending of information indicative of the image interval change request directly to primary apparatus 1002. In this manner, primary apparatus 1002 may receive information indicative of the image interval change request from secondary apparatus 1006. The sending, the causation of sending, and the image interval change request may be similar as described regarding FIGURE 2, FIGURE 3, FIGURES 4A-4D, and FIGURES 5A-5B.

At interaction 1012, server 1004 causes sending of information indicative of the image interval change request to primary apparatus 1002. In this manner, primary apparatus 1002 may receive information indicative of the image interval change request from server 1004. In at least one example embodiment, secondary apparatus 1006 causes sending of information indicative of the image interval change request directly to primary apparatus 1002. In this manner, primary apparatus 1002 may receive information indicative of the image interval change request from secondary apparatus 1006. The sending, the causation of sending, and the image interval change request may be similar as described regarding FIGURE 2, FIGURE 3, FIGURES 4A-4D, and FIGURES 5A-5B.

At block 1014, primary apparatus 1002 causes display of an image interval change request notification based, at least in part, on the image interval change request. The causation, the display, the image interval change request notification, and the display of the image interval change request notification based, at least in part, on the image interval change request may be similar as described regarding FIGURE 2, FIGURE 3, FIGURES 4A-4D, and FIGURES 5A-5B.

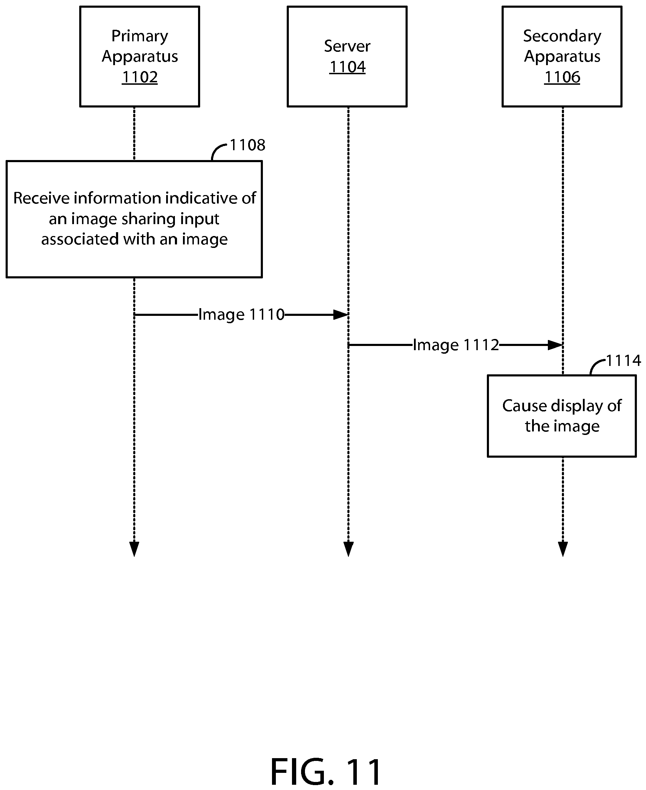

FIGURE 11 is an interaction diagram illustrating activities associated with sending of an image according to at least one example embodiment. In at least one example embodiment, there is a set of operations that corresponds with, at least some of, the activities of FIGURE 11. For example, there may be a set of operations associated with activities of one or more apparatuses of FIGURE 11. An apparatus, for example electronic apparatus 10 of FIGURE 1, or a portion thereof, apparatus 202 of FIGURE 2, or a portion thereof, server 204 of FIGURE 2, or a portion thereof, or apparatus 206 of FIGURE 2, or a portion thereof, may utilize the set of operations. In at least one example embodiment, primary apparatus 1102 performs, at least some of, the activities associated with server 1104 of FIGURE 11. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform at least part of the set of operations of FIGURE 11.

As previously discussed, in some circumstances, a user may desire to share view one or more images, related images, and/or the like, with another user in a collaborative and social manner. For example, a user may desire to share one or more images and/or related image with another user. In such an example, the user may desire to send an image to another user's electronic apparatus.

In the example of FIGURE 11, communication between primary apparatus 1102, server 1104, and secondary apparatus 1106 may be similar as described regarding FIGURE 2. Each of primary apparatus 1102 and secondary apparatus 1106 may be a phone, a tablet, a computer, a laptop, an electronic apparatus, and/or the like. Server 1104 may be a computer, a service platform, a repository, an application, and/or the like. In at least one example embodiment, the activities illustrated in the example of FIGURE 11 may occur subsequent to the activities illustrated in the example of FIGURE 3. For example block 1108 may occur subsequent to block 328 of FIGURE 3. Although the example of FIGURE 11 illustrates sending of an image from primary apparatus 1102 to secondary apparatus 1106, in at least one example embodiment, secondary apparatus 1106 causes sending of an image from secondary apparatus 1106 to primary apparatus 1102.

At block 1108, primary apparatus 1102 receives information indicative of an image sharing input associated with an image. The receipt, the image sharing input, the image, and the association of the image sharing input and the image may be similar as described regarding FIGURE 2, FIGURE 3, FIGURES 4A-4D, FIGURES 5A-5B, FIGURES 6A-6B, and FIGURES 7A-7B.

At interaction 1110, primary apparatus 1102 causes sending of the image to server 1104 based, at least in part, on receipt of information indicative of the image sharing input associated with the image. In this manner, server 1104 may receive the image from primary apparatus 1102. In at least one example embodiment, primary apparatus 1102 causes sending of the image directly to secondary apparatus 1106. In this manner, secondary apparatus 1106 may receive the image from primary apparatus 1102. The sending, the causation of sending, and the image may be similar as described regarding FIGURE 2, FIGURE 3, FIGURES 4A-4D, FIGURES 5A-5B, FIGURES 6A-6B, and FIGURES 7A-7B.

At interaction 1112, server 1104 causes sending of the image to secondary apparatus 1106. In this manner, secondary apparatus 1106 may receive the image from server 1104. In at least one example embodiment, primary apparatus 1102 causes sending of the image directly to secondary apparatus 1106. In this manner, secondary apparatus 1106 may receive the image from primary apparatus 1102. The sending, the causation of sending, and the image may be similar as described regarding FIGURE 2, FIGURE 3, FIGURES 4A-4D, FIGURES 5A-5B, FIGURES 6A-6B, and FIGURES 7A-7B.

At block 1114, secondary apparatus 1106 causes display of the image. The causation, the display, and the image may be similar as described regarding FIGURE 2, FIGURE 3, FIGURES 4A-4D, FIGURES 5A-5B, FIGURES 6A-6B, and FIGURES 7A-7B.

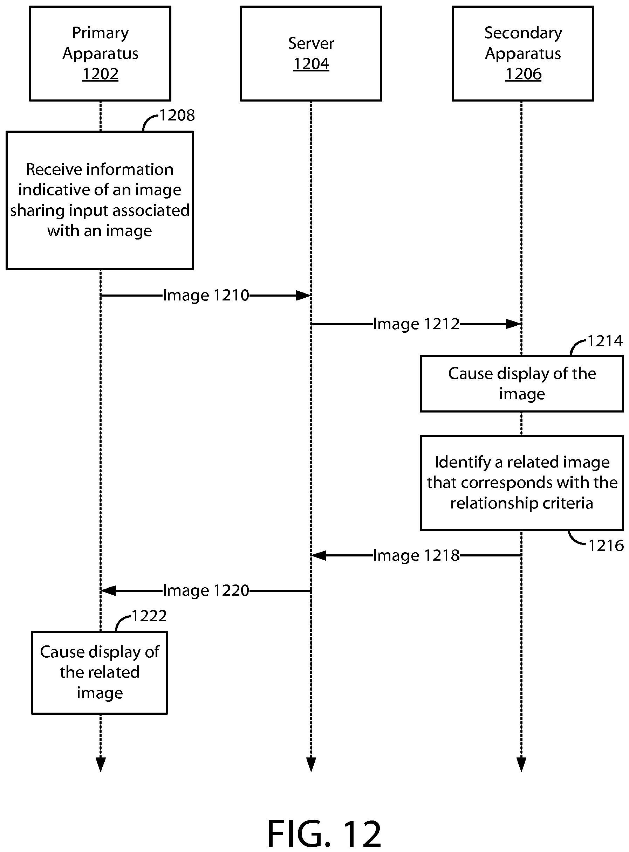

FIGURE 12 is an interaction diagram illustrating activities associated with sending of an image according to at least one example embodiment. In at least one example embodiment, there is a set of operations that corresponds with, at least some of, the activities of FIGURE 12. For example, there may be a set of operations associated with activities of one or more apparatuses of FIGURE 12. An apparatus, for example electronic apparatus 10 of FIGURE 1, or a portion thereof, apparatus 202 of FIGURE 2, or a portion thereof, server 204 of FIGURE 2, or a portion thereof, or apparatus 206 of FIGURE 2, or a portion thereof, may utilize the set of operations. In at least one example embodiment, primary apparatus 1202 performs, at least some of, the activities associated with server 1204 of FIGURE 12. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform at least part of the set of operations of FIGURE 12.

As previously discussed, in some circumstances, a user may desire to share view one or more images, related images, and/or the like, with another user in a collaborative and social manner. For example, a user may desire to share one or more images and/or related image with another user. In such an example, the user may desire to send an image to another user's electronic apparatus. In such an example, the user may desire to receive a related image from the other user based, at least in part, on sending of the image to the other user. For example, the user and the other user may desire to swap images and/or related images in order to facilitate a collaborative and social viewing experience.

In the example of FIGURE 12, communication between primary apparatus 1202, server 1204, and secondary apparatus 1206 may be similar as described regarding FIGURE 2. Each of primary apparatus 1202 and secondary apparatus 1206 may be a phone, a tablet, a computer, a laptop, an electronic apparatus, and/or the like. Server 1204 may be a computer, a service platform, a repository, an application, and/or the like. In at least one example embodiment, the activities illustrated in the example of FIGURE 12 may occur subsequent to the activities illustrated in the example of FIGURE 3. For example block 1208 may occur subsequent to block 328 of FIGURE 3.

At block 1208, primary apparatus 1202 receives information indicative of an image sharing input associated with an image. The receipt, the image sharing input, the image, and the association of the image sharing input and the image may be similar as described regarding FIGURE 2, FIGURE 3, FIGURES 4A-4D, FIGURES 5A-5B, FIGURES 6A-6B, and FIGURES 7A-7B.

At interaction 1210, primary apparatus 1202 causes sending of the image to server 1204 based, at least in part, on receipt of information indicative of the image sharing input associated with the image. In this manner, server 1204 may receive the image from primary apparatus 1202. In at least one example embodiment, primary apparatus 1202 causes sending of the image directly to secondary apparatus 1206. In this manner, secondary apparatus 1206 may receive the image from primary apparatus 1202. The sending, the causation of sending, and the image may be similar as described regarding FIGURE 2, FIGURE 3, FIGURES 4A-4D, FIGURES 5A-5B, FIGURES 6A-6B, and FIGURES 7A-7B.

At interaction 1212, server 1204 causes sending of the image to secondary apparatus 1206. In this manner, secondary apparatus 1206 may receive the image from server 1204. In at least one example embodiment, primary apparatus 1202 causes sending of the image directly to secondary apparatus 1206. In this manner, secondary apparatus 1206 may receive the image from primary apparatus 1202. The sending, the causation of sending, and the image may be similar as described regarding FIGURE 2, FIGURE 3, FIGURES 4A-4D, FIGURES 5A-5B, FIGURES 6A-6B, and FIGURES 7A-7B.

At block 1214, secondary apparatus 1206 causes display of the image. The causation, the display, and the image may be similar as described regarding FIGURE 2, FIGURE 3, FIGURES 4A-4D, FIGURES 5A-5B, FIGURES 6A-6B, and FIGURES 7A-7B.

At block 1216, secondary apparatus 1206 identifies a related image that corresponds with the relationship criteria. The identification, the related image, the relationship criteria, and the correspondence of the related image with the relationship criteria may be similar as described regarding FIGURE 2, FIGURE 3, FIGURES 4A-4D, FIGURES 5A-5B, FIGURES 6A-6B, and FIGURES 7A-7B.

At interaction 1218, secondary apparatus 1206 causes sending of the related image to server 1204 based, at least in part, on receipt of the image that corresponds with the relationship criteria. In this manner, server 1204 may receive the related image from secondary apparatus 1206. In at least one example embodiment, secondary apparatus 1206 causes sending of the related image directly to primary apparatus 1202. In this manner, primary apparatus 1202 may receive the related image from secondary apparatus 1206. The sending, the causation of sending, and the related image may be similar as described regarding FIGURE 2, FIGURE 3, FIGURES 4A-4D, FIGURES 5A-5B, FIGURES 6A-6B, and FIGURES 7A-7B.

At interaction 1220, server 1204 causes sending of the related image to primary apparatus 1202. In this manner, primary apparatus 1202 may receive the related image from server 1204. In at least one example embodiment, secondary apparatus 1206 causes sending of the related image directly to primary apparatus 1202. In this manner, primary apparatus 1202 may receive the related image from secondary apparatus 1206. The sending, the causation of sending, and the related image may be similar as described regarding FIGURE 2, FIGURE 3, FIGURES 4A-4D, FIGURES 5A-5B, FIGURES 6A-6B, and FIGURES 7A-7B.

At block 1222, primary apparatus 1202 causes display of the related image based, at least in part, on receipt of the related image. The causation, the display, and the related image may be similar as described regarding FIGURE 2, FIGURE 3, FIGURES 4A-4D, FIGURES 5A-5B, FIGURES 6A-6B, and FIGURES 7A-7B.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 910 of FIGURE 9 may be performed after interaction 912 of FIGURE 9. Furthermore, if desired, one or more of the above-described functions may be optional or may be combined. For example, interaction 326 of FIGURE 3 may be optional and/or combined with interaction 324 of FIGURE 3.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
causing (308), by a primary apparatus, display of an image;
identifying metadata of the image;
causing (310) sending of the metadata of the image;
determining (312) a relationship criteria based on the metadata associated with the image;
identifying (314) a secondary apparatus (306) that is associated with one or more related images that correspond with the relationship criteria identifying metadata that corresponds with metadata associated with the image;
causing (316) establishment of a limited image sharing session with the secondary apparatus (306), wherein the limited image sharing session limits sharing of images to those images that correspond with the associated relationship criteria;
receiving an indication (318) that the limited image sharing session has been established with the secondary apparatus (306);
causing (326) sending of the image to the secondary apparatus (306);
receiving information indicative of an image change input (510) indicating termination of display of the image;
causing display of another image (508) that corresponds with the relationship criteria based, at least in part, on the image change input (510); and
causing sending of an image change directive based on the image change input to the secondary apparatus, wherein the image change directive indicates termination of display of the image at the secondary apparatus and causation of display of the other image that corresponds with the relationship criteria.

2. The method of Claim 1, further comprising:
causing sending (320) of an indication that the limited image sharing session has been established to the secondary apparatus

3. The method of any of Claims 1-2, further comprising receiving information indicative of an image sharing input (610) associated with the image (606), wherein causation of sending the image (606) to the secondary apparatus is based, at least in part, on the image sharing input (610).

4. The method of Claim 3, further comprising causing sending of information indicative of an image sharing directive associated with the image based, at least in part, on the image sharing input.

5. The method of any of Claims 1 to 4, further comprising determining the other image based, at least in part, on an image order list, the image order list identifying an order in which images are arranged for display.

6. The method of Claim 5, further comprising determining the image order list based, at least in part, on a sort criteria.

7. The method of any of claims 1 to 6, further comprising:
receiving information indicative of failure to identify a different image corresponding with the associated relationship criteria from the separate apparatus; and
causing display of a representation of a warning notification based, at least in part, on receipt of information indicative of the separate apparatus failing to identify the different image corresponding with the associated relationship criteria.

8. The method of any of Claims 1 to 7, further comprising:
receiving information indicative of an image display interval setting input, the image display interval setting input identifying an image display interval;
determining that the image display interval has elapsed; and
causing display of another image based, at least in part, on determination that the image display interval has elapsed.

9. The method of any of Claims 1 to 8, further comprising:
receiving information indicative of an image interval change request; and
causing display of an image interval change request notification based, at least in part, on the image interval change request.

10. An apparatus comprising means for performing the method of any of the preceding claims.

11. The apparatus of Claim 10, wherein the means for performing the method comprise at least one processor and at least one memory, the memory comprising machine-readable instructions, that when executed cause the apparatus to perform the method of any of claims 1 to 9.

12. At least one computer readable medium comprising instructions that, when executed, perform the method of any of claims 1 to 9.

13. A method comprising:
receiving (310) metadata of an image from a primary apparatus;
determining (312) a relationship criteria that corresponds with the image, the relationship criteria being based on the metadata associated with the image;
identifying (314) a secondary apparatus that is associated with one or more related images that correspond with the relationship criteria;
causing (316) establishment of a limited image sharing session between the primary apparatus (302) and the secondary apparatus (306), wherein the limited image sharing session limits sharing to the image and one or more related images that correspond with the relationship criteria;
sending (318, 320) an indication that the limited image sharing session has been established to the primary apparatus (302) and the secondary apparatus (306); receiving an image change directive from the primary apparatus, wherein the image change directive indicates termination of a display of the image at the secondary apparatus and causation of display of another image that corresponds with the relationship criteria; and
sending the image change directive to the secondary apparatus.

## Patentansprüche

1. Verfahren, das Folgendes umfasst:
Bewirken (308) durch eine primäre Vorrichtung einer Anzeige eines Bildes;
Identifizieren von Metadaten des Bildes;
Bewirken (310) des Sendens der Metadaten des Bildes;
Bestimmen (312) eines Beziehungskriteriums anhand der Metadaten, die dem Bild zugeordnet sind;
Identifizieren (314) einer sekundären Vorrichtung (306), die einem oder mehreren zugehörigen Bildern zugeordnet ist, die dem Beziehungskriterium entsprechen, das Metadaten identifiziert, die Metadaten entsprechen, die dem Bild zugeordnet sind;
Bewirken (316) einer Einrichtung einer begrenzten Bildmitbenutzungssitzung mit der sekundären Vorrichtung (306), wobei die begrenzte Bildmitbenutzungssitzung das gemeinsame Nutzen von Bildern auf solche Bilder begrenzt, die dem zugeordneten Beziehungskriterium entsprechen;
Empfangen einer Angabe (318), dass die begrenzte Bildmitbenutzungssitzung mit der sekundären Vorrichtung (306) eingerichtet wurde;
Bewirken (326) des Sendens des Bildes an die sekundäre Vorrichtung (306);
Empfangen von Informationen, die eine Bildänderungseingabe (510) angeben, die eine Beendigung der Anzeige des Bildes angibt;
Bewirken der Anzeige eines anderen Bildes (508), das dem Beziehungskriterium entspricht, zumindest teilweise anhand der Bildänderungseingabe (510); und
Bewirken des Sendens einer Bildänderungsanweisung anhand der Bildänderungseingabe in die sekundäre Vorrichtung, wobei die Bildänderungsanweisung eine Beendigung der Anzeige des Bildes an der sekundären Vorrichtung und eine Ursache einer Anzeige des anderen Bildes, das dem Beziehungskriterium entspricht, angibt.

2. Verfahren nach Anspruch 1, das ferner Folgendes umfasst:
Bewirken des Sendens (320) einer Angabe, dass die begrenzte Bildmitbenutzungssitzung eingerichtet wurde, an die sekundäre Vorrichtung.

3. Verfahren nach einem der Ansprüche 1-2, das ferner umfasst, Informationen zu empfangen, die eine Bildmitbenutzungseingabe (610) angeben, die dem Bild (606) zugeordnet ist, wobei die Ursache des Sendens des Bildes (606) an die sekundäre Vorrichtung zumindest teilweise auf der Bildmitbenutzungseingabe (610) beruht.

4. Verfahren nach Anspruch 3, das ferner umfasst, das Senden von Informationen, die eine Bildmitbenutzungsanweisung, die dem Bild zugeordnet ist, angeben, zumindest teilweise anhand der Bildmitbenutzungseingabe zu bewirken.

5. Verfahren nach einem der Ansprüche 1 bis 4, das ferner umfasst, das andere Bild zumindest teilweise anhand einer Bildreihenfolgenliste zu bestimmen, wobei die Bildreihenfolgenliste eine Reihenfolge identifiziert, in der die Bilder für eine Anzeige angeordnet sind.

6. Verfahren nach Anspruch 5, das ferner umfasst, die Bildreihenfolgenliste zumindest teilweise anhand eines Sortierungskriteriums zu bestimmen.

7. Verfahren nach einem der Ansprüche 1 bis 6, das ferner Folgendes umfasst:
Empfangen von Informationen, die ein Scheitern angeben, ein anderes Bild zu identifizieren, das dem zugeordneten Beziehungskriterium entspricht, von der getrennten Vorrichtung; und
Bewirken der Anzeige einer Repräsentation einer Warnbenachrichtigung zumindest teilweise anhand eines Empfangs von Informationen, die angeben, dass die getrennte Vorrichtung scheitert, das andere Bild zu identifizieren, das dem zugeordneten Beziehungskriterium entspricht.

8. Verfahren nach einem der Anspruche 1 bis 7, das ferner Folgendes umfasst:
Empfangen von Informationen, die eine Bildanzeigeintervalleinstelleingabe angeben, wobei die Bildanzeigeintervalleinstelleingabe ein Bildanzeigeintervall identifiziert,
Bestimmen, dass das Bildanzeigeintervall abgelaufen ist; und
Bewirken der Anzeige eines anderen Bildes zumindest teilweise anhand der Bestimmung, dass das Bildanzeigeintervall abgelaufen ist.

9. Verfahren nach einem der Ansprüche 1 bis 8, das ferner Folgendes umfasst:
Empfangen von Informationen, die eine Bildintervalländerungsanforderung angeben; und
Bewirken der Anzeige einer Bildintervalländerungsanforderungsbenachrichtigung zumindest teilweise anhand der Bildintervalländerungsanforderung.

10. Vorrichtung, die Mittel zum Ausführen des Verfahrens nach einem der vorhergehenden Ansprüche umfasst.

11. Vorrichtung nach Anspruch 10, wobei die Mittel zum Ausführen des Verfahrens mindestens einen Prozessor und mindestens einen Speicher umfassen, wobei der Speicher maschinenlesbare Anweisungen umfasst, die dann, wenn sie ausgeführt werden, bewirken, dass die Vorrichtung das Verfahren nach einem der Ansprüche 1 bis 9 ausführt.

12. Mindestens ein computerlesbares Medium, das Anweisungen umfasst, die dann, wenn sie ausgeführt werden, das Verfahren nach einem der Ansprüche 1 bis 9 ausführen.

13. Verfahren, das Folgendes umfasst:
Empfangen (310) von Metadaten eines Bildes von einer primären Vorrichtung;
Bestimmen (312) eines Beziehungskriteriums, das dem Bild entspricht, wobei das Beziehungskriterium auf den Metadaten, die dem Bild zugeordnet sind, beruht;
Identifizieren (314) einer sekundären Vorrichtung, die einem oder mehreren zugehörigen Bildern zugeordnet ist, die dem Beziehungskriterium entsprechen;
Bewirken (316) einer Einrichtung einer begrenzten Bildmitbenutzungssitzung zwischen der primären Vorrichtung (302) und der sekundären Vorrichtung (306), wobei die begrenzte Bildmitbenutzungssitzung das gemeinsame Nutzen auf das Bild und ein oder mehrere zugehörige Bilder, die dem Beziehungskriterium entsprechen, begrenzt;
Senden (318, 320) einer Angabe, dass die begrenzte Bildmitbenutzungssitzung mit der primären Vorrichtung (302) und der sekundären Vorrichtung (306) eingerichtet wurde; Empfangen einer Bildänderungsanweisung von der primären Vorrichtung, wobei die Bildänderungsanweisung eine Beendigung einer Anzeige des Bildes an der sekundären Vorrichtung und eine Ursache einer Anzeige eines anderen Bildes, das dem Beziehungskriterium entspricht, angibt; und
Senden der Bildänderungsanweisung an die sekundäre Vorrichtung.

## Revendications

1. Procédé comprenant :
l'induction (308), par un appareil principal, de l'affichage d'une image ;
l'identification de métadonnées de l'image ;
l'induction (310) de l'envoi des métadonnées de l'image ;
la détermination (312) d'un critère de relation basé sur les métadonnées associées à l'image ;
l'identification (314) d'un appareil secondaire (306) qui est associé à une ou plusieurs images apparentées qui correspondent au critère de relation identifiant des métadonnées qui correspond aux métadonnées associées à l'image ;
l'induction (316) de l'établissement d'une session de partage d'images limitées avec l'appareil secondaire (306), la session de partage d'images limitées limitant le partage d'images aux images qui correspondent au critère de relation associé ;
la réception d'une indication (318) selon laquelle la session de partage d'images limitées a été établie avec l'appareil secondaire (306) ;
l'induction (326) de l'envoi de l'image à l'appareil secondaire (306) ;
la réception d'informations indicatives d'une entrée de changement d'image (510) indiquant l'interruption de l'affichage de l'image ;
l'induction de l'affichage d'une autre image (508) qui correspond au critère de relation au moins en partie sur la base de l'entrée de changement d'image (510) ; et
l'induction de l'envoi d'une directive de changement d'image basée sur l'entrée de changement d'image à l'appareil secondaire, la directive de changement d'image indiquant l'interruption de l'affichage de l'image sur l'appareil secondaire et l'induction de l'affichage de l'autre image qui correspond au critère de relation.

2. Procédé de la revendication 1, comprenant en outre :
l'induction de l'envoi (320) d'une indication selon laquelle la session de partage d'images limitées a été établie à l'appareil secondaire.

3. Procédé de l'une quelconque des revendications 1 et 2, comprenant en outre la réception d'informations indicatives d'une entrée de partage d'image (610) associée à l'image (606), l'induction de l'envoi de l'image (606) à l'appareil secondaire étant au moins en partie basée sur l'entrée de partage d'image (610).

4. Procédé de la revendication 3, comprenant en outre l'induction de l'envoi d'informations indicatives d'une directive de partage d'image associée à l'image au moins en partie sur la base de l'entrée de partage d'image.

5. Procédé de l'une quelconque des revendications 1 à 4, comprenant en outre la détermination de l'autre image au moins en partie sur la base d'une liste ordonnée d'images, la liste ordonnée d'images identifiant un ordre dans lequel des images sont disposées pour être affichées.

6. Procédé de la revendication 5, comprenant en outre la détermination de la liste ordonnée d'images au moins en partie sur la base d'un critère de tri.

7. Procédé de l'une quelconque des revendications 1 à 6, comprenant en outre :
la réception d'informations indicatives d'une impossibilité d'identifier une image différente correspondant au critère de relation associé depuis l'appareil séparé ; et
l'induction de l'affichage d'une représentation d'une notification d'avertissement au moins en partie sur la base de la réception d'informations indicatives de l'impossibilité pour l'appareil séparé d'identifier l'image différente correspondant au critère de relation associé.

8. Procédé de l'une quelconque des revendications 1 à 7, comprenant en outre :
la réception d'informations indicatives d'une entrée de réglage d'intervalle d'affichage d'image, l'entrée de réglage d'intervalle d'affichage d'image identifiant un intervalle d'affichage d'image ;
la détermination que l'intervalle d'affichage d'image s'est écoulé ; et
l'induction de l'affichage d'une autre image au moins en partie sur la base de la détermination que l'intervalle d'affichage d'image s'est écoulé.

9. Procédé de l'une quelconque des revendications 1 à 8, comprenant en outre :
la réception d'informations indicatives d'une requête de changement d'intervalle d'image ; et
l'induction de l'affichage d'une notification de requête de changement d'intervalle d'image au moins en partie sur la base de la requête de changement d'intervalle d'image.

10. Appareil comprenant des moyens pour effectuer le procédé de l'une quelconque des revendications précédentes.

11. Appareil de la revendication 10, dans lequel les moyens pour effectuer le procédé comprenant au moins un processeur et au moins une mémoire, la mémoire comprenant des instructions lisibles par machine qui, lorsqu'elles sont exécutées, conduisent l'appareil à effectuer le procédé de l'une quelconque des revendications 1 à 9.

12. Au moins un support lisible par ordinateur comprenant des instructions qui, lorsqu'elles sont exécutées, effectuent le procédé de l'une quelconque des revendications 1 à 9.

13. Procédé comprenant :
la réception (310) de métadonnées d'une image depuis un appareil principal ;
la détermination (312) d'un critère de relation qui correspond à l'image, le critère de relation étant basé sur les métadonnées associées à l'image ;
l'identification (314) d'un appareil secondaire qui est associé à une ou plusieurs images apparentées qui correspondent au critère de relation ;
l'induction (316) de l'établissement d'une session de partage d'images limitées entre l'appareil principal (302) et l'appareil secondaire (306), la session de partage d'images limitées limitant le partage à l'image et une ou plusieurs images apparentées qui correspondent au critère de relation ;
l'envoi (318, 320) d'une indication selon laquelle la session de partage d'images limitées a été établie à l'appareil principal (302) et l'appareil secondaire (306) ; la réception d'une directive de changement d'image depuis l'appareil principal, la directive de changement d'image indiquant l'interruption de l'affichage de l'image sur l'appareil secondaire, et l'induction de l'affichage d'une autre image qui correspond au critère de relation ; et
l'envoi de la directive de changement d'image à l'appareil secondaire.
